# EUROPÄISCHE PATENTSCHRIFT

(11) **EP 2 227 964 B1**
(45) Veröffentlichungstag und Bekanntmachung des Hinweises auf die Patenterteilung: **06.05.2015**
(21) Anmeldenummer: 10155951.6
(22) Anmeldetag: 09.03.2010
(51) Int. Cl.: A22C 17/00, A22C 25/18, B26D 1/147, B26D 3/18, B26D 5/00, B26D 7/01, B26D 7/18, B26D 7/30

(54) **Vorrichtung und Verfahren zum Portionieren**
Device and portioning method
Dispositif et procédé de mise en portions

(30) Priorität: 09.03.2009 DE 102009012382
(43) Veröffentlichungstag der Anmeldung: 15.09.2010
(73) Patentinhaber: Anton & Völkl Patente UG (haftungsbeschränkt) & Co. KG, 83737 Irschenberg (DE)
(72) Erfinder: Völkl, Thomas, 83052 Bruckmühl (DE)
(74) Vertreter: Weickmann & Weickmann

(56) Entgegenhaltungen:
- EP-A2- 1 445 078
- WO-A1-03/064123
- WO-A1-2006/123368
- DE-A1-102004 041 881
- US-A- 4 050 339

## Beschreibung

### I. Anwendungsgebiet

Die Erfindung betrifft eine Vorrichtung sowie ein Verfahren zum gewichtsgenauen Portionieren.

### II. Technischer Hintergrund

Großhandel und Großverbraucher im Lebensmittelbereich, insbesondere Großküchen, Catering-Services, Restaurantketten und ähnliche wünschen, dass vor allem bei den Lebensmitteln wie Fisch und Fleisch, die hiervon zur Verfügung gestellten Scheiben bzw. mehrere Scheiben umfassenden Portionen immer das gleiche Gewicht besitzen, wobei möglicherweise nur eine Gewichtstoleranz von ± 3% zugelassen wird, z. B. bei Frischfleisch zum Verkauf im Selbstbedienungs-Einzelhandel mit 500 g Soll-Gewicht.

Das Abtrennen einer Scheibe mit einem bestimmten vorgegebenen Soll-Gewicht von einem großen Muskelstrang aus Fisch oder Fleisch, der einerseits eine inhomogene Konsistenz besitzt und andererseits eine jeweils unterschiedliche Form und Größe, bereitet vor allem im automatisierten Betrieb, bei dem die Erzeugung von z.B. 200 Scheiben pro Minute gefordert wird, erhebliche Probleme.

Bekannt sind hierfür Portioniervorrichtungen und entsprechende Verfahren, bei denen davon ausgegangen wird, dass übereinstimmende Volumina desselben Fleischstückes oder Fischstückes auch das annährend gleiche Gewicht besitzen. Davon ausgehend wird mit dem Schneidgut, welches ja zumindest in Maßen verformbar ist, eine Portionier-Kammer mit vorgegebenen Abmessungen und Volumen vollständig gefüllt und anschließend durch einen Trennschnitt unmittelbar an der offenen Seite der sacklochförmigen Portionier-Kammer eine Scheibe vom Schneidgut abgetrennt.

Zur Automatisierung dieses Vorganges wird das strangförmige Schneidgut in einem vorne offenen und hinten durch einen längsbeweglichen Pressstempel verschlossenen Formrohr, welches in Längsrichtung einen konstanten Querschnitt besitzt, eingelegt und durch Vorwärtsschieben des Pressstempels so verpresst, dass daraus ein kürzerer Strang mit gleich bleibendem Querschnitt entsprechend dem Querschnitt des Formrohres entsteht.

Aus diesem Formrohr wird mittels des Pressstempels der Strang aus Schneidgut aus dem vorderen Ende heraus in die sich in der Regel unmittelbar anschließende Portionier-Kammer hineinverlagert, eine Scheibe abgeschnitten, und so fort.

Dabei treten noch eine Vielzahl von Problemen auf, die eine vollständig exakte Einhaltung des Ist-Gewichtes verhindern oder erschweren, die jedoch von den Fleisch- bzw. Fischverarbeitern angestrebt wird, um deren Wareneinsatz zu minimieren und die Gewinnspannen zu sichern.

Ein Problem besteht darin, dass innerhalb eines Schneidgutes von einem immer gleichem spezifischen Gewicht ausgegangen wird, welches für die einzelnen Schneidgut-Gattungen, also zum Beispiel verschiedene Muskelstränge von verschiedenen Schlachttieren, manuell vorgegeben bzw. gespeichert sind.

Abhängig von dem beim Portioniervorgang in der abzutrennenden Scheibe vorherrschenden Druck sowie der Zusammensetzung aus Fett bzw. Wasser bzw. Porigkeit bzw. Anteil der Muskelfaserarten ist dies jedoch nicht immer zutreffend. Weiterhin weichen die Druck- und Reibungsverhältnisse zwischen Schneidgut und dem umgebenden Bauteil erheblich voneinander ab, wenn man das vordere Ende des Formrohres bzw. der Portionier-Kammer einerseits mit dem hinteren Ende des Formrohres, wo das Schneidgut mittels des Pressstempels zur Vorverformung bzw. Vorverpressung und zum Vorschieben in die Portionier-Kammer beaufschlagt wird, vergleicht.

Ein wichtiges Kriterium für den Verarbeiter von Schneidgut ist die Prozessgeschwindigkeit, mit der Schneidgut in gewichtsgenaue Scheiben aufgeschnitten werden kann.

Diese Prozessgeschwindigkeit kann jedoch nicht beliebig erhöht werden, da sie ab einem gewissen Punkt auf Kosten der Portioniergenauigkeit und auch der Menge an Resteanfall geht.

Dabei sind zwei prinzipiell verschiedene Ausführungen des Aufschneidens mittels einer Portionierkammer zu unterscheiden:
Die höchste Prozessgeschwindigkeit kann erreicht werden, wenn der Boden der Portionierkammer um ein Vielfaches der Dicke einer Scheibe stufenweise zurückgezogen werden kann, so dass nach dem Abtrennen einer Scheibe das Schneidgut einschließlich der bereits abgetrennten Scheiben weiter in die Portionierkammer vorwärts geschoben und die nächste Scheibe abgetrennt wird, bis das gesamte Schneidgut aufgeschnitten ist und sich im aufgeschnittenen Zustand innerhalb der Portionierkammer befindet.

Der Nachteil dieser Vorgehensweise besteht zum einen darin, dass nach dem anschließenden Entleeren der gefüllten Portionierkammer die daraus entnommenen Scheiben aneinander haften und nicht automatisch einzeln weiterverarbeitet werden können, sondern zunächst aufwändig, meist manuell, vereinzelt werden müssen.

Ein weiterer Nachteil besteht darin, dass durch das stufenweise Zurückweichen des Bodens der Portionierkammer und die nicht immer 100%ige Volumentreue jeder Scheibe ein Summenfehler auftritt, der die Portioniergenauigkeit der einzelnen Scheibe, vor allem gegen Ende des Schneidgutes, abfallen lässt.

Eine höhere Volumentreue und damit Gewichtsgenauigkeit der einzelnen Scheiben lässt sich dagegen mit Einzelscheibenablage erreichen, bei der nach Vorwärtsschieben des Schneidgutes in die Portionierkammer um die Dicke einer Scheibe diese Scheibe abgetrennt wird und anschließend sofort aus der Portionierkammer entfernt wird, bevor das Schneidgut mit dem vorderen Ende erneut in eine Portionierkammer vorgeschoben und die nächste Scheibe abgetrennt wird

Derartige Vorrichtungen und Verfahren zeigen die den nächstreichenden Stand der Technik bildende DE 10 2004 041 881 A1 sowie die EP 1445 078 A2.

Bei beiden Schriften sind die Formrohre seitlich offen und mittels eines Seitenstempels, der unterschiedlich weit eingefahren werden kann, zu verschließen.

Die Prozessgeschwindigkeit ist hierbei geringer, da nach dem Abtrennen jeder Scheibe ein Entfernen der abgetrennten Scheibe aus der Schneidposition und der Portionierkammer erfolgen muss.

Dafür kann - gegebenenfalls durch Verwiegen jeder einzelnen abgetrennten Scheibe - das Ist-Gewicht der Scheiben durch Nachstellung der Position des Bodens der Portionierkammer sehr genau auf das Soll-Gewicht nachgeregelt werden.

### III. Darstellung der Erfindung

### a) Technische Aufgabe

Es ist daher die Aufgabe gemäß der Erfindung, ein Verfahren sowie eine Vorrichtung zum Aufschneiden von Schneidgut in Scheiben bei Einzelscheiben-Ablage zur Verfügung zu stellen, die dennoch eine hohe Prozessgeschwindigkeit und eine geringe Störanfälligkeit bieten.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Indem bei einer gattungsgemäßen Portioniermaschine das Vorschubmodul mehrere Formrohre mit unterschiedlich großen Querschnitten umfasst und das Portioniermodul analog dazu mehrere vom Querschnitt her unterschiedlich große Portionierkammern, kann vom Bediener manuell oder mit vorgeschalteter optischer Größenerkennung auch automatisch immer dasjenige Formrohr für das jeweilige Schneidgut verwendet werden, welches dessen Größe am besten entspricht.

Die Wahl des richtigen Formrohres und der damit korrespondierenden Portionierkammer wird beschleunigt, indem beide jeweils in einem Revolver aufgenommen sind und die Drehung der Revolver miteinander gekoppelt werden, so dass in der Schneidstellung sich immer die richtige Portionierkammer dem richtigen Formrohr gegenüber befindet.

Vorzugsweise ist die Portionierkammer dabei in einer Portionierplatte aufgenommen. Um den Betrieb und damit Durchsatz der Portioniervorrichtung zu verbessern, ist jede Größe eines Formrohres und jede Größe einer Portionierkammer in dem jeweiligen Revolver doppelt vorhanden, insbesondere auf zwei einander bezüglich der Rotationsachse gegenüberliegenden Positionen.

Auf diese Art und Weise kann mit dem einen geeigneten Formrohr gerade ein Schneidgut in Scheiben geschnitten werden, während das andere geeignete Formrohr gleicher Größe gerade mit dem nächsten Schneidgut befüllt wird.

Vorzugsweise sind die am häufigsten benötigten Querschnittsgrößen auf den jeweiligen Revolvern häufiger vorhanden, als seltener benötigte, besonders kleine und besonders große Querschnitte.

So könnten bei vier verschiedenen Größen die beiden mittleren Größen jeweils dreifach oder vierfach, die größte und kleinste Abmessung dagegen nur jeweils zweifach auf einem Revolver vorhanden sein.

Eine besonders vorteilhafte Gesamtkonstruktion ergibt sich, wenn die Schwenkachsen von Vorschubrevolver und Portionierrevolver nicht miteinander fluchten, sondern sich bezogen auf die Schneidposition auf getrennten, insbesondere einander gegenüberliegenden, Winkelpositionen befinden, da hierdurch die geringsten Kollisionen zu befürchten sind, wenn das soeben benutzte Formrohr aus der Schneidposition weggedreht wird und andererseits die soeben gefüllte Portionierkammer ebenfalls aus der Schneidposition weggedreht wird und die darin enthaltene Scheibe abgeführt werden muss.

Eine besonders einfache Konstruktion der Vorrichtung ergibt sich, wenn die einzelnen Formrohre einen feststehenden Querschnitt besitzen, also keinen durch einen Seitenstempel variablen Querschnitt, und ebenso die Portionierkammer, und darüber hinaus sowohl das Portioniermodul als auch das Vorschubmodul unmittelbar zu dem dazwischen angeordneten Portioniermesser benachbart angeordnet sind, also insbesondere ohne eine sogenannte Vorpressplatte oder Schneidplatte dazwischen.

Wenn zusätzlich die - in Querrichtung zueinander beabstandeten - Rotationsachsen des Portionierrevolvers und des Vorschubrevolvers vertikal angeordnet sind, sind die einzelnen Formrohre im Vorschubrevolver unten durch die darin befindlichen jeweiligen Pressstempel verschlossen, nach oben jedoch offen, jedenfalls bis auf den durch den seitenversetzt dazu angeordneten, vom Portioniermodul überdeckten Bereich, so dass während des Aufschneidens eines Schneidgutes in der Schneidposition wahlweise nicht nur in ein, sondern in mehrere der nach oben offenen und zugänglichen anderen Formrohre neues Schneidgut eingelegt werden kann, was die Prozessgeschwindigkeit erhöht.

Dem gleichen Zweck dient auch die Tatsache, dass das drehend antreibbare, etwa sichelförmige Portioniermesser, das vorzugsweise mit seiner konvexen Außenkante schneidet, drehbar um die Rotationsachse des Portionierrevolvers angeordnet ist.

Da das Portioniermesser von seiner Drehachse aus nur in eine Radialrichtung abstrebt und in Umfangsrichtung dabei einen Bereich abdeckt, der mindestens das Abdecken einer Portionierkammer erlaubt, kann dieses Portioniermesser nicht nur zum Abtrennen der Scheiben verwendet werden, sondern auch zum Verschließen der befüllten Portionierkammer auf ihrem Schwenk-Weg von der Schneidposition zur Abwurfposition.

Zu diesem Zweck wird das Portioniermesser - insbesondere von einer definierten Grundstellung aus - bei gefüllter Portionierkammer und stillstehendem Portionierrevolver sowie Vorschubrevolver zunächst soweit gedreht, dass es das Schneidgut vollständig durchtrennt.

Anschließend wird das Portioniermesser noch weiter gedreht, gegebenenfalls unter Verlangsamung seiner Drehgeschwindigkeit, aber nunmehr - also ab dem vollständigen Durchtrennen des Schneidgutes - der Portionierrevolver, also einschließlich der die soeben abgetrennte Scheibe enthaltenen Portionierkammer - in die gleiche Richtung weitergedreht wie das Portioniermesser, um die gefüllte Portionierkammer von der Schneidposition in die dieser in der Regel gegenüberliegende Abwurfposition zu bringen.

Auf diesem Schwenkweg unterscheidet sich die zunehmend in ihrer Drehung beschleunigte Portionierkammer von dem gegebenenfalls etwas abgebremsten Portioniermesser in ihrer Drehgeschwindigkeit nur so wenig, dass die Portionierkammer auf diesem Weg immer vollständig von dem Portioniermesser verschlossen bleibt, weshalb vorzugsweise die Erstreckung des Portioniermessers in Umfangsrichtung größer ist als es zur Abdeckung nur einer Portionierkammer erforderlich ist.

Vorzugsweise erstreckt sich das Portioniermesser in Umfangsrichtung über die Abmessungen mindestens einer Portionierkammer mindestens über 60°, besser mindestens 90°.

Nach dem vollständigen Durchtrennen des Schneidgutes mittels des Portioniermessers kann der Druck von der abgetrennten Scheibe in axialer Richtung auch dadurch genommen werden, dass der Gegenstempel, der den Boden der Portionierkammer bildet, etwas zurückgefahren wird.

Das Auswerfen der abgetrennten Scheibe aus der Portionierkammer in der Auswurfposition nach unten erfolgt, indem in dieser Auswurfposition die Portionierkammer abgebremst oder insbesondere vollständig in ihrer Drehbewegung angehalten wird und das Portioniermesser weiterdreht, vorzugsweise bis in seine Grundstellung, und dadurch die Öffnung der Portionierkammer freigibt, so dass die darin aufgenommene Scheibe durch nach unten Bewegen des Gegenstempels und/oder Einblasen von Druckluft gegen die Rückseite der Scheibe ausgeworfen wird auf einen darunter positionierten Abförderer, vorzugsweise einen Bandförderer.

Der Höhenabstand des Abförderers zur Öffnung der Portionierkammer ist veränderbar, abhängig von der Dicke und Konsistenz der herzustellenden Scheibe.

Das Formrohr kann dabei auch eine seitlich offene Formrohrrinne sein, die durch einen Seitenstempel verschlossen werden kann.

Indem zusätzlich der Seitenstempel zwischen einer ausgefahrenen Füllposition und einer einzigen, definierten, eingefahrenen Pressposition verfahrbar ist, kann das Einlegen des Schneidgutes sehr erleichtert werden, in dem hierfür die zurückgezogene Füllposition des Seitenstempels gewählt wird und anschließend das Schneidgut in Querrichtung mittels des Seitenstempels vorverpresst wird.

Durch die Anordnung einer gefederten Frontfläche am Seitenstempel, die sich um eine Querachse zur Längserstreckung des Seitenstempels verschwenken kann oder die entlang der Längsrichtung des Seitenstempels in mehreren Abschnitten separat gefedert ist, kann sich der Seitenstempel auch sehr gut an eine harte Oberfläche des Schneidgutes, etwa einen Knochen im Schneidgut, anlegen, was insbesondere für das Schneiden von Kotelettsträngen wichtig ist.

Indem die Portionierkammer und/oder der Hohlraum des Formrohres nahe dessen vorderen Ende mit Luftöffnungen zum Entlüften oder Beaufschlagen mit Luft vorhanden sind, kann das Schneidgut optimal in der entsprechenden Richtung vorwärts geschoben werden und die in der Portionierkammer aufgenommene, abgetrennte Scheibe gehalten, sowie anschließend mittels Druckluftbeaufschlagung oder Bewegung des Gegenstempels ausgestoßen werden.

Um das Gewicht des im Vorschubmodul aufgenommenen Schneidgutes zu bestimmen, kann dort eine Indirekt-Wiegevorrichtung enthalten sein.

Diese umfasst eine Erfassungsvorrichtung, die nach dem Verpressen des Schneidgutes die eingenommene Längsposition des Presstempels erfasst sowie eine Eingabeeinheit zum Eingeben der Gattung des Schneidgutes.

Die nachgeschaltete Recheneinheit kann für verschiedene Gattungen die spezifischen Gewichte der Schneidgüter bei verschieden spezifischen Pressdrücken abgespeichert enthalten, so dass daraus über das Volumen des Schneidgutes dessen Gesamtgewicht berechenbar ist.

Gegebenenfalls sind für die Ermittlung des Volumens noch Sensoren zur Feststellung von gewähltem Formrohr und der Querposition des Seitenstempels in der Pressstellung notwendig.

Während die Portionierkammer einen vorzugsweise unveränderlichen Querschnitt aufweist, ist ihre Tiefe - in Längsrichtung gemessen - variabel, in dem der Boden der Portionierkammer von einem Gegenstempel gebildet wird, der in Längsrichtung verlagerbar ist.

Dadurch kann die Dicke und somit das Gewicht der in die Portionierkammer hineinragenden und anschließend abzutrennenden Scheiben variiert werden.

Vorzugsweise ist ein Gegenstempel-Antrieb in Längsrichtung für den Gegenstempel nur in der Schneidposition der Gesamtvorrichtung und höchstens zusätzlich in der Auswurfposition vorhanden.

Das vom Formrohr mittels des Pressstempels bis in die Portionierkammer hinein vorgeschobene Schneidgut wird vom Boden der Portionierkammer her ebenfalls von einem dort angeordneten Gegenstempel mit Druck beaufschlagt.

Dabei wird der Druck des Gegenstempels höher gewählt als der Druck des Pressstempels im Formrohr, insbesondere doppelt so hoch gewählt, um zu vermeiden, dass der Antrieb für den Pressstempel im Formrohr zu groß und zu schwer wird:
Da der Pressstempel einen wesentlich längeren Weg bewältigen muss als der Gegenstempel, ergibt dies zusammen mit dem benötigten Druck eine besonders hohe Leistung, wogegen dies bei dem geringen Bewegungsweg des Gegenstempels sich weniger stark auf die Leistung niederschlägt.

Durch die Messung des Druckes in der Pressfläche des Gegenstempels gegen das Schneidgut oder ersatzweise am Gegenstempelantrieb, kann der Anpressdruck zwischen Gegenstempel und Schneidgut auch während des Eindringens des Portioniermessers in das Schneidgut konstant gehalten werden.

Ebenso kann der Gegenstempel nach dem Herausschwenken der Portionierkammer mit darin aufgenommener Scheibe aus der Schneidstellung zum Auswerfen verwendet werden, vorzugsweise zusammen mit einem hinter dem Gegenstempel liegenden Teil der Portionierkammer, der als Druckraum ausgebildet ist und zum Ausstoßen mit Pressluft beaufschlagbar ist, die dann z. B. durch einen Randspalt zur Portionierkammer hin die aufgenommene Scheibe auswirft und/oder durch Längsbewegung des Gegenstempels.

Dieser Druckraum kann durchaus von einer von der Rückseite des Gegenstempels abragenden Kolbenstange durchdrungen sein, die den Gegenstempel mit dem zugeordneten Antrieb verbindet, wobei die Steuerung für einen oder beide der Revolver sowie die Gegenstempel mit den Ventilen zum Öffnen und Schließen der Entlüftungsleitungen bzw. Druckluftleitungen in Verbindung stehen kann.

Um gewichtsgenaue Scheiben von einem nur bedingt formhaltigen Schneidgut mittels einer solchen Vorrichtung abzutrennen, wird somit zunächst das Schneidgut in Längsrichtung, meist von vorne, also der Seite des späteren Portioniermessers her, in das offene Formrohr eingelegt und der beim Einlegen in die Füllstellung gegebenenfalls nach außen gefahrene Seitenstempel anschließend bis zu einer definierten Pressstellung in Querrichtung vorwärts verfahren.

Hierfür wird aus mehreren Formrohren mit unterschiedlichen Querschnitten in der Pressstellung das zu dem einzulegenden Schneidgut passendste Formrohr ausgewählt, vorzugsweise automatisch ausgewählt, indem das Schneidgut hinsichtlich seiner Form und Größe zuvor optisch abgetastet wird und das Schneidgut in das passende Formrohr von vorne, also von oben, eingelegt.

Anschließend wird dem vorderen Ende des Formrohres gegenüber eine Portionierkammer mit dem entsprechenden Querschnitt gegenübergestellt und das Schneidgut im Formrohr nach vorne gepresst mittels eines von hinten kommenden Längs-Pressstempels, so dass das vordere Ende des Schneidgutes aus dem vorderen Ende des Formrohres heraus in die Portionierkammer ragt und diese vollständig ausfüllt, so dass anschließend mittels eines in Längsrichtung fest positionierten Portioniermessers zwischen Portionierkammer und Formrohr das Schneidgut abgetrennt werden kann und dadurch eine Scheibe mit dem Volumen der Portionierkammer erzeugt wird, die sich in der Portionierkammer befindet.

Das Schneidgut wird vorzugsweise vor dem Einbringen in das Formrohr und damit die Vorrichtung auf eine Temperatur von -2° C bis -6° C gebracht für das Einbringen in das Formrohr.

Durch das Ermitteln der physikalischen Verhältnisse in der Portionierkammer bei oder unmittelbar vor dem Abschneiden der Scheibe, gegebenenfalls auch direkt im dort befindlichen Teil des Schneidgutes, wobei es vorzugsweise um den Druck geht, kann die Presskraft des Pressstempels variiert werden, um das Schneidgut nicht zu schädigen und dennoch eine vollständige Füllung der Portionierkammer zu erreichen.

Nach dem Abtrennen der Scheibe und dem Wegbewegen der Portionierkammer aus der Schneidstellung wird dabei der Druck vom Schneidgut genommen, in dem insbesondere der axialbewegliche Gegenstempel und/oder der Pressstempel etwas zurückverfahren wird.

Ebenso kann die Portionierkammer nach dem Wegschwenken wieder belüftet werden, um die darin befindliche Scheibe auszustoßen.

Um das vollständige Füllen der Portionierkammer zu erleichtern, kann der Gegenstempel, der ihren Boden bildet, beim Einschieben des Schneidgutes in die Portionierkammer weiter zurückgezogen sein als es der gewünschten Soll-Dicke der späteren Scheibe entspricht und erst bei oder nach dem Vorwärtsschieben des Schneidgutes mittels des Presstempels in die Portionierkammer hinein, der Gegenstempel in die Soll-Position bewegt werden, insbesondere mit einer definierten Kraft.

Um Fleischwürfel, etwa für Gulasch, herzustellen, können von dem den Boden der Portionierkammer bildenden Gegenstempel sich kreuzende, stegförmige Schneidklingen in die Portionierkammer hinein aufragen, deren Höhe der Dicke der herzustellenden Scheiben entsprechen müssen.

Dadurch wird beim Einpressen des vorderen Endes des Schneidgutes in die Portionierkammer gleichzeitig ein Würfelschneiden durchgeführt.

Um durch das anschließende Abtrennen der Scheibe in Querrichtung keine Kollision zwischen den Schneidstegen des Gegenstempels und dem Portioniermesser zu riskieren, sind die Schneidstege vorzugsweise in axialer Richtung relativ zum Gegenstempel beweglich und stehen gegenüber dem Gegenstempel beim Vorwärtsschieben des Schneidgutes weiter vor, insbesondere über die Position des Portioniermessers hinaus vor und werden, entweder erst kurz vor der Abtrennung der Scheibe durch das Portioniermesser wieder hinter diese Position zurückgenommen.

Anschließend kann die einzeln abgeschnittene Scheibe verwogen oder auf andere Weise deren Gewicht automatisch bestimmt werden. Abhängig von der festgestellten Abweichung zu ihrem Soll-Gewicht werden die physikalischen Parameter in der Portionierkammer und/oder die Stellung der Stempel korrigiert.

Der Gegenstempel kann zu Beginn des Einfahrens des Schneidgutes in die Portionierkammer auch an deren offener Frontseite stehen und somit mit dem einfahrenden Schneidgut zusammen zurückfahren, wie erwähnt gegebenenfalls über die Position der Soll-Dicke der herzustellenden Scheibe hinaus, und erst anschließend mit dem Soll-Druck gegen das Schneidgut wieder vorwärts geschoben werden gegen den Pressstempel, wodurch vermieden wird, dass wegen der hohen Reibungsfläche entlang des Formrohres der Pressstempel von hinten mit hoher Kraft gegen das Schneidgut pressen muss, um das vordere Ende des Schneidgutes vollständig ausfüllend in die Portionierkammer zu pressen.

Aus dem gleichen Grund kann vor dem Eindringen des Schneidgutes in die Portionierkammer das vordere Ende des Schneidgutes zunächst gegen eine Vorpressplatte vorverpresst werden und nach deren Entfernung das Schneidgut mit dem vorderen Ende in die Portionierkammer hineinbewegt werden.

### c) Ausführungsbeispiele

Ausführungsformen gemäß der Erfindung sind im Folgenden beispielhaft näher beschrieben. Es zeigen:
- Fig. 1a:: Die Schneidemaschine in Gesamtansicht im geschlossenen Zustand,
- Fig. 1b:: die Schneidmaschine im Längsschnitt,
- Fig. 2:: eine Aufsicht in Richtung der Rotationsachsen, und
- Fig. 3:: ein seitlich offenes Formrohr.

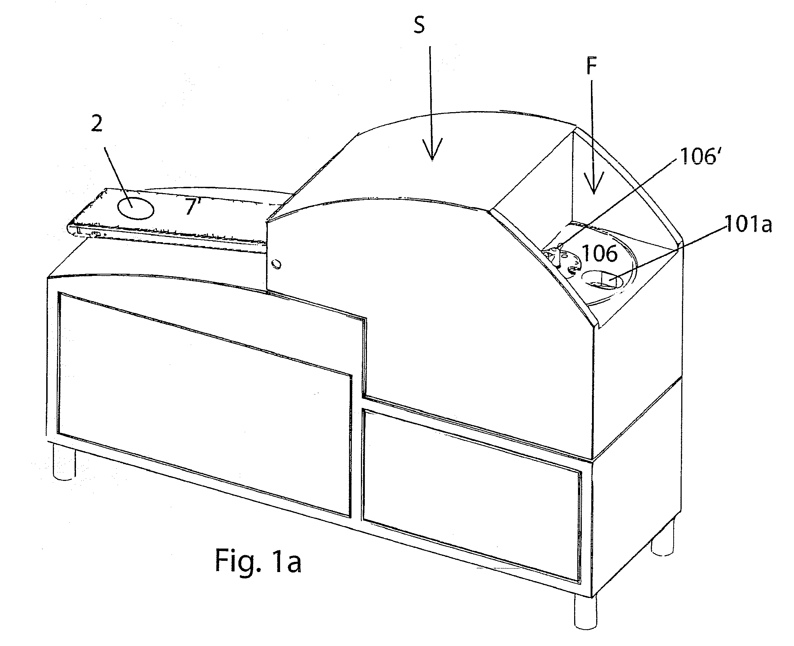

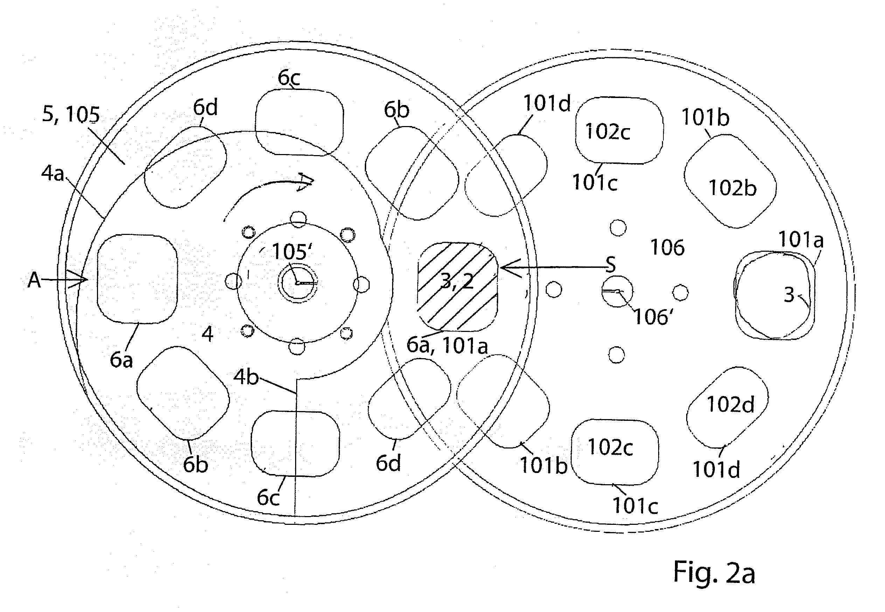

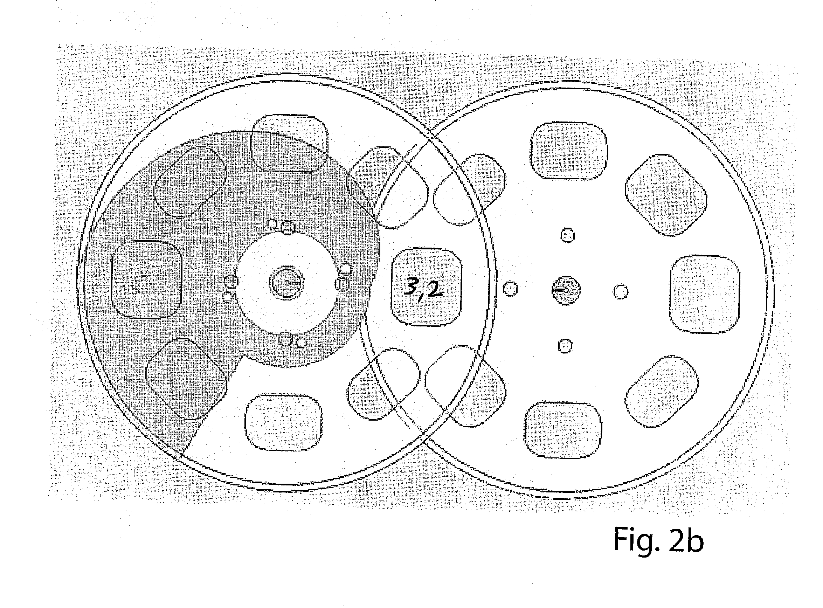

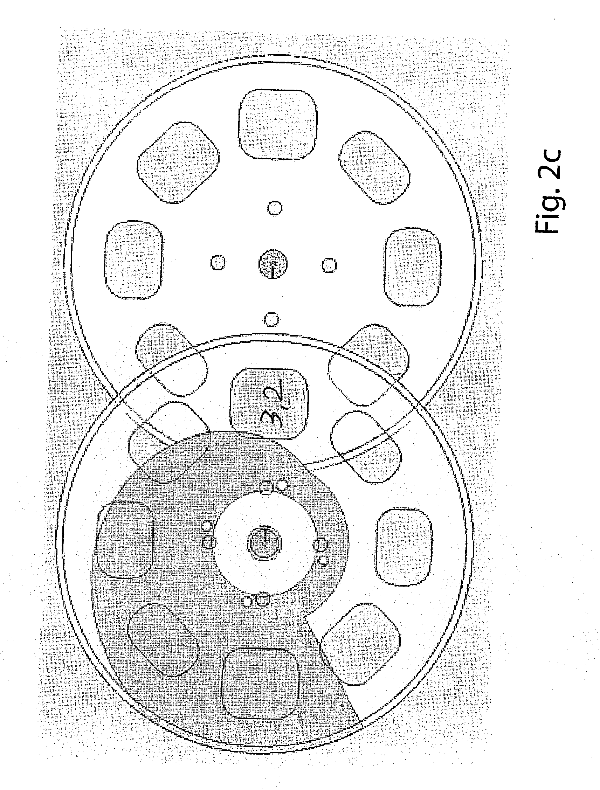

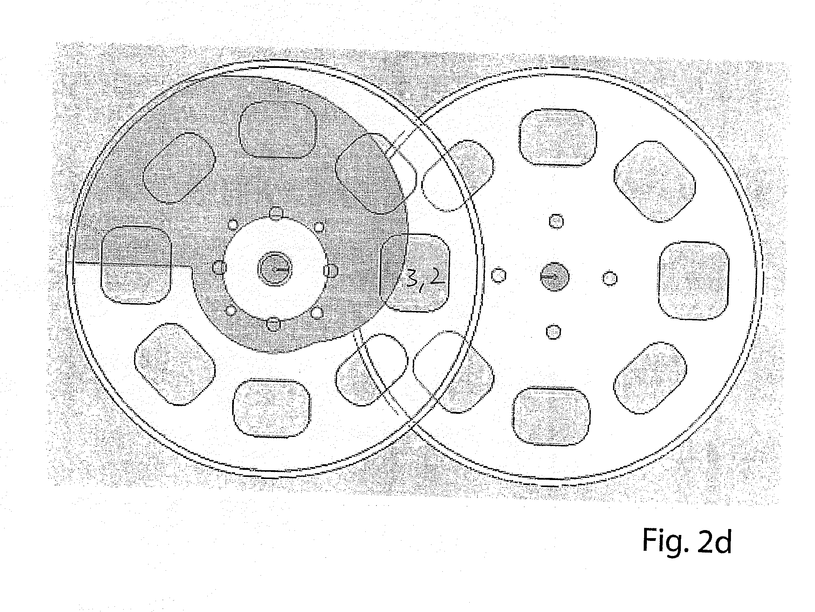

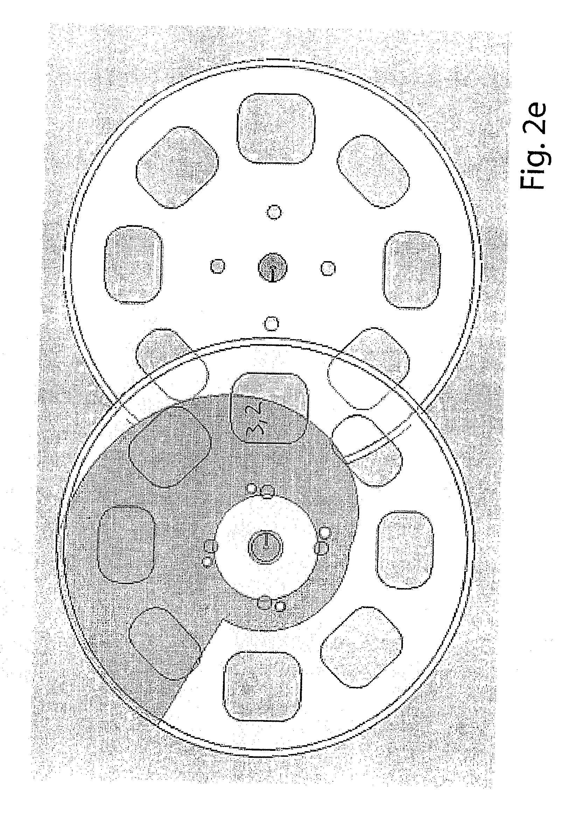

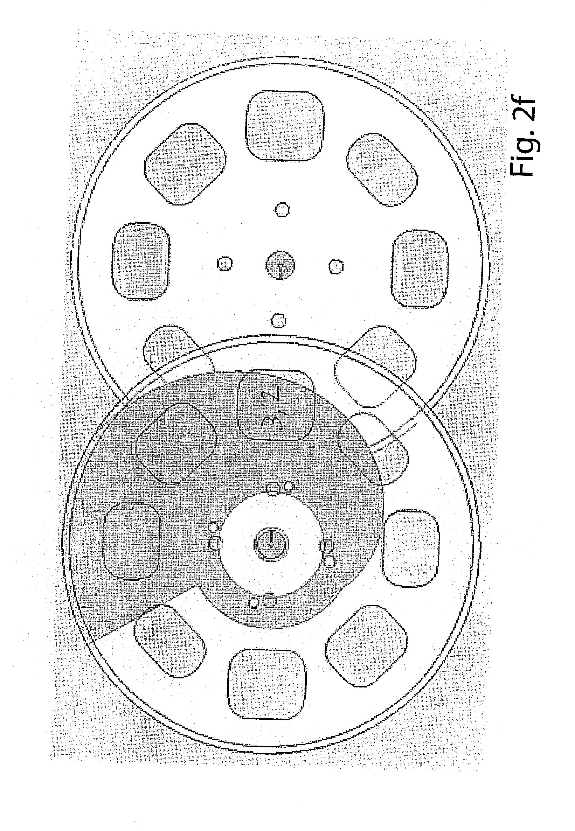

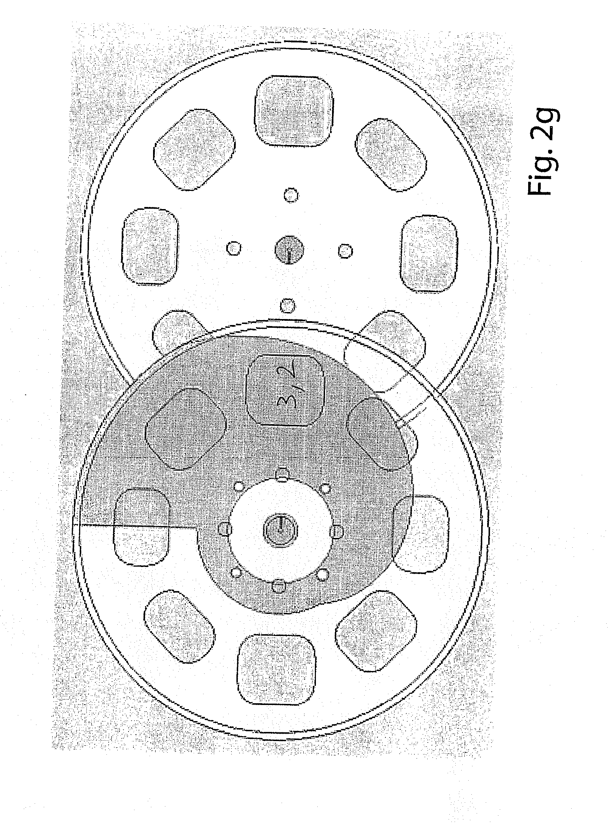

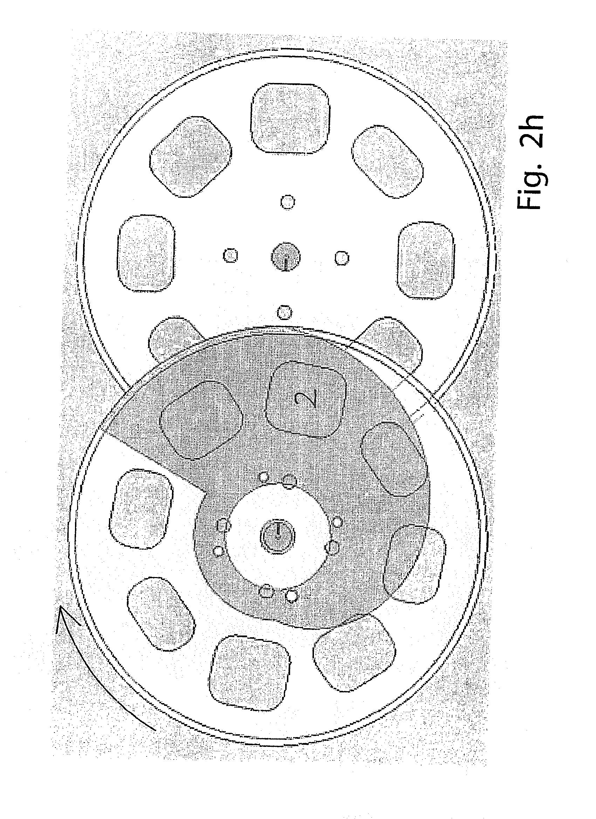

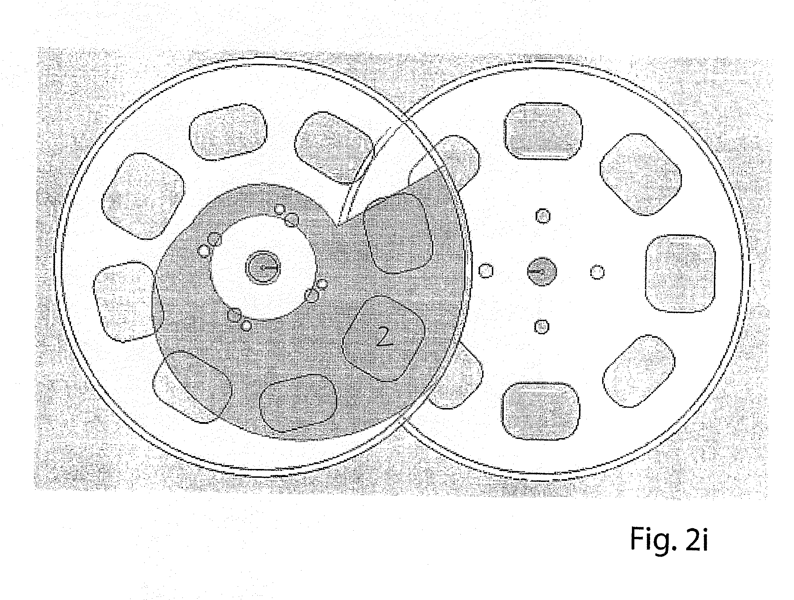

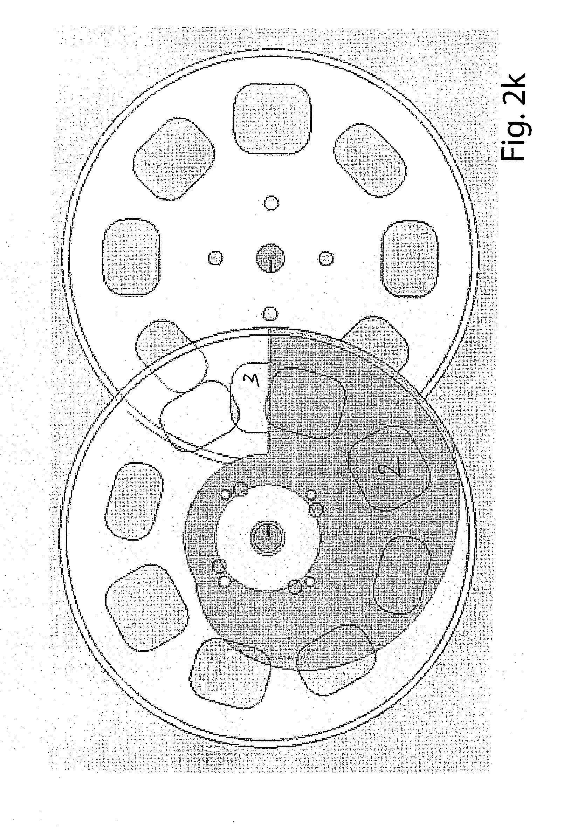

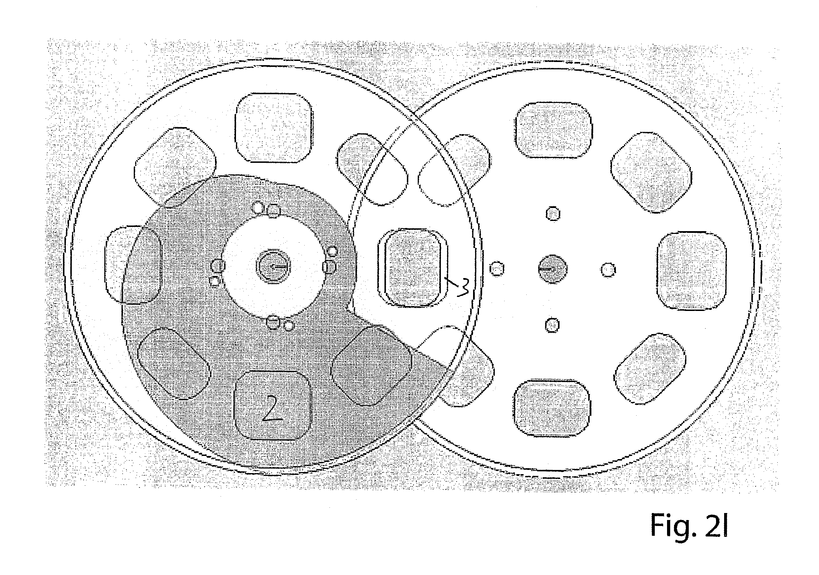

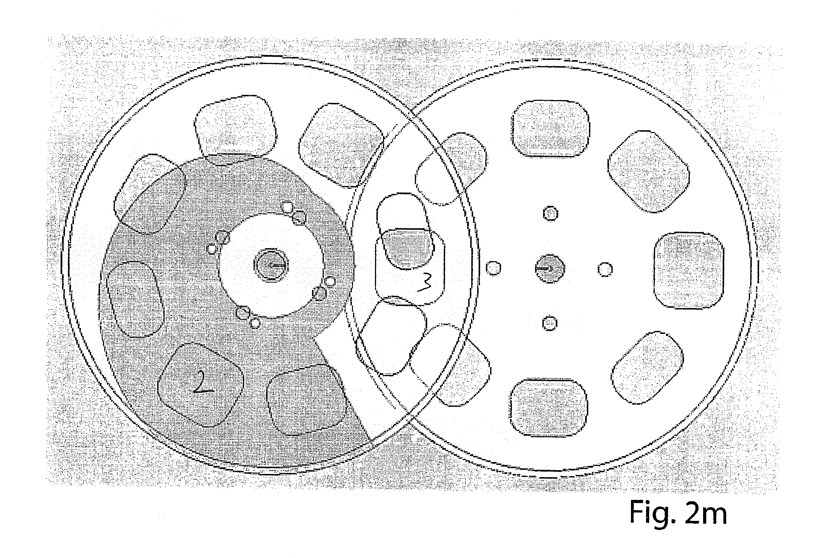

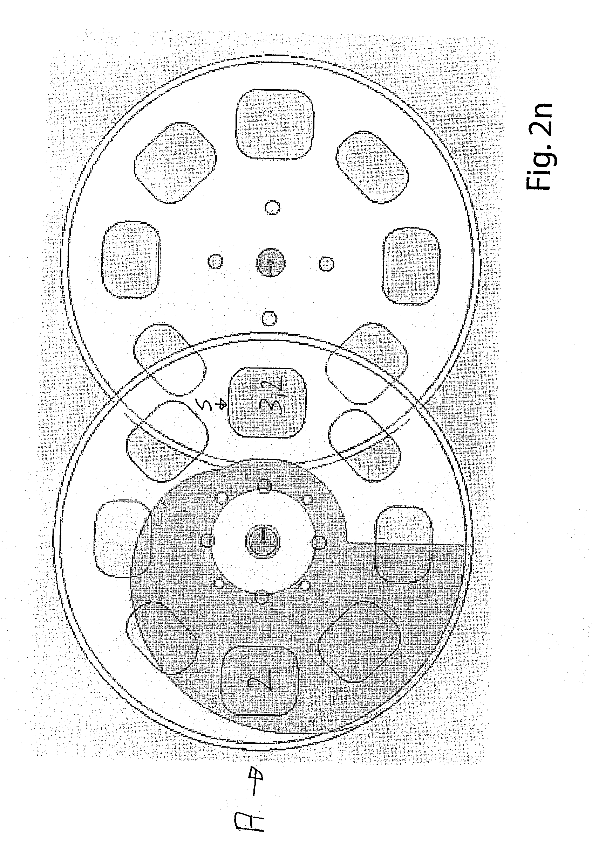

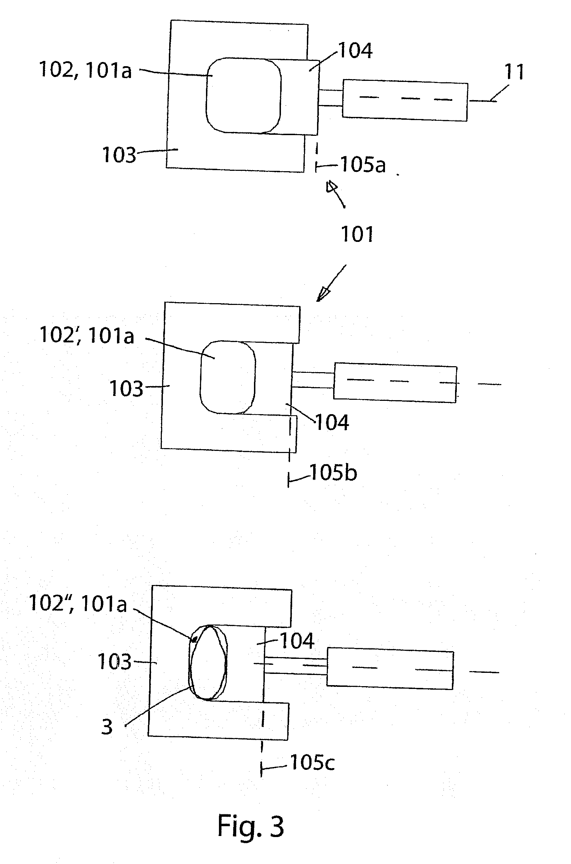

Figur 1a zeigt die im Wesentlichen von einem Gehäuse umschlossene Schneidemaschine, bei der am einen Ende lediglich als Füllbereich F ein Teil der oberen Stirnseite des vertikal stehenden Vorschubrevolvers 106 mit den darin mündenden Formrohren 101 a... - von denen hier nur eines eingezeichnet ist - zum Befüllen mit einem nicht dargestellten Schneidgut 3 - wie in Figur 2 oder 3 ersichtlich - zugänglich ist.

Am anderen Ende führt der Abförderer 7 die geschnittenen Scheiben 2 aus der Maschine einzeln zur Weiterverarbeitung heraus.

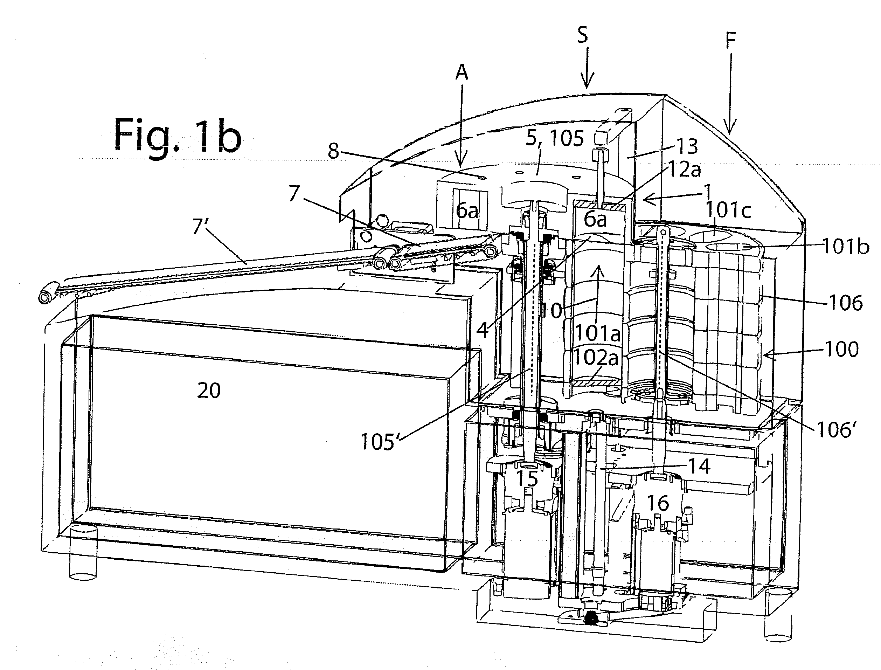

Figur 1b zeigt den inneren Aufbau der Maschine in Längsrichtung geschnitten, also durch die beiden parallel zueinander verlaufenden, zueinander versetzten, Rotationsachsen 105', 106', was gleichzeitig die Verlaufsrichtung der Abförderer 7 und 7' ist.

Um die vertikale Rotationsachse 106' dreht sich der auch in Figur 1a teilweise sichtbare Vorschubrevolver 106, und unmittelbar darüber, mit dazwischen lediglich angeordnetem dünnen Portioniermesser 4, der Portionierrevolver 105 um seine Rotationsachse 105', wobei beide in der Aufsicht der Figuren 2 betrachtet einander teilweise überlappen, so dass in der Schneidposition S, die sich im Überlappungsbereich befindet, eine der Portionierkammern 6a, b... der Portionierplatte 5, die das wesentliche Teil des Portionierrevolvers 105 darstellt, mit einem Formrohr 101 a des Vorschubrevolvers 106, das den gleichen Querschnitt wie die Portionierkammer 6a besitzt, in fluchtenden Übereinstimmung gebracht werden kann.

Wie am besten in den Figuren 2 erkennbar, befinden sich um die Rotationsachse 106' herum im Vorschubrevolver 106 in diesem Fall vier unterschiedlich große und auch unterschiedlich geformte Formrohre 101a bis d, von denen jedes doppelt auf einander gegenüberliegenden Seiten bezüglich der Rotationsachse 106' vorhanden ist, so dass der Vorschubrevolver 106 insgesamt acht solcher Formrohre 101a....d aufweist.

Diese sind stirnseitig oben und unten offen, an der Unterseite befindet sich jedoch in jedem der Formrohre 101a... ein entsprechend dimensionierter Pressstempel 102a, b..., der das jeweilige Formrohr nach unten verschließt und der das Formrohr nie vollständig verlässt, so dass beim Drehen des Vorschubrevolvers 106 alle Pressstempel 102a, b mit diesem mitdrehen.

Analog das Gleiche hinsichtlich Querschnittsgröße, Anzahl und Anordnung gilt für die Portionierkammern 6a... im Portionierrevolver 105, die an ihren hinteren stirnseitigen Enden jeweils von einem Gegenstempel 12a, b... passender Größe verschlossen sind, der ebenso wie der Pressstempel 102a, b in Vorschubrichtung 10 verschiebbar ist und die ebenfalls alle mit dem Portionierrevolver 105 mitdrehen.

Wie Figur 1b zeigt, sind somit sowohl die Formrohre 101a, b als auch die Portionierkammern 6a, b zu der gemeinsamen Kontaktebene hin offen, auf der das am besten in Figur 2 dargestellte, dünne, scheibenförmige Portioniermesser 4 drehbar um die Rotationsachse 105' des Portionierrevolvers 105 angeordnet ist.

Um ein Schneidgut 3 in Scheiben 2 aufzuschneiden, welches - wie in Figur 2 ersichtlich - den freien inneren Querschnitt eines der Formrohre 101a fasst vollständig ausfüllt und beim Aufsitzen auf dem unteren Pressstempel 102 in der vollständig nach unten zurückgezogenen Position fast bis zur oberen Stirnseite des Formrohres 101 a reicht, wird wie folgt vorgegangen:
Nach Einlegen des Schneidgutes 3 entsprechend seinen Querschnittsabmessungen in dem Füllbereich F in dasjenige von oben zugängliche Formrohr 101a, b... dessen Größe und Querschnitt dem Schneidgut 3 am nächsten kommt, wird der Vorschubrevolver 106 so gedreht, dass sich das gefüllte Formrohr, in diesem Fall das Formrohr 101 a, auf der Schneidposition S, also im Überlappungsbereich von Vorschubrevolver 106 und Portionierrevolver 105 genau auf der Verbindungslinie zwischen der Rotationsachsen 105' und 106' befindet.

Gleichzeitig wird der Portionierrevolver 105 so gedreht, dass sich die Portionierkammer 6a, die den gleichen Querschnitt besitzt, wie das jetzt an der Schneidposition S befindliche Formrohr 101a, fluchtend mit diesem unmittelbar über dem Vorschubrevolver 106 befindet, so dass dazwischen lediglich noch das dünne, plattenförmige Portioniermesser 4 durchdrehen kann, welches sich momentan jedoch in der in Figur 2a dargestellten Grundstellung befindet, also den Querschnitt von dem in der Schneidstellung S befindlichen Formrohr 101a und der Portionierkammer 106a nicht abdeckt.

Nunmehr wird von unten der in der Schneidstellung S vorhandene PressstempelAntrieb 14 axial in Bewegung gesetzt und drückt den im Formrohr 101a befindlichen Pressstempel 102 (siehe Figur 1b) nach oben und schiebt damit das Schneidgut 3 vor sich her, bis es am Ende der Portionierkammer 6a an dessen Gegenstempel 12a anliegt.

Durch weiteres Vorwärtspressen des Pressstempels 102a wird das Schneidgut 3 axial zusammengepresst und dehnt sich dadurch in Querrichtung aus, bis es den freien Querschnitt des Formrohres 101 a und auch der angrenzenden Portionierkammer 6a vollständig und über die gesamten Länge hohlraumfrei ausfüllt.

Sobald dies erreicht ist, wird das sichelförmige Portioniermesser 4, welches mit seiner konvexen Außenkante als Schneidkante 4a schneidet, einmal durch den Querschnitt des Schneidgutes 3 hindurchgeschwenkt und trennt damit den in der Portionierkammer 6 aufgenommenen Teil des Schneidgutes 3 vom Rest als Scheibe 2, die nun abgeführt werden muss.

Zu diesem Zweck wird der Portionierrevolver 105 um seine Rotationsachse 105' um 180° gedreht, bis sich die mit der abgetrennten Scheibe 2 gefüllte Portionierkammer 6a in der Abwurfposition A befindet, in der sich unter der Portionierplatte 5 des Portionierrevolvers 105 ein Abförderer 7 befindet, auf den die Scheibe 2 herabfallen kann, um sie einzeln abzutransportieren und einer Weiterverarbeitung zuzuführen.

Somit wird klar, dass sich während des Aufschneidens eines Schneidgutes 3 nach dem Abtrennen jeder Scheibe der Portionierrevolver 105 dreht, der Vorschubrevolver 106 während dieser Vorgänge jedoch in Ruhe stehen bleibt und somit während des Aufschneiden eines Schneidgutes 3 in der Schneidposition S vom Bediener oder auch automatisch im Füllbereich F eine oder gar mehrere der offen zugänglichen leeren Formrohre 101a, b bereits mit einem passenden neuen Schneidgut 3 gefüllt werden kann, was die Prozessgeschwindigkeit steigert.

Ebenso dient das doppelte Vorhandensein jeder Querschnittsgröße einer Portionierkammer 6a, b... der Steigerung der Prozessgeschwindigkeit, da das Vorwärtsschieben des Schneidgutes 3 in die neu positionierte leere Portionierkammer 6a hinein bereits beginnen kann, während an der Abwurfposition noch das Entfernen der abgetrennten Scheibe 2 aus der anderen, gleichgroßen Portionierkammer 6a stattfindet.

Das Entfernen aus der Portionierkammer 6a kann durch nach unten Bewegen des in jeder Portionierkammer 6a, b befindlichen Gegenstempel 12a, b erfolgen und/oder durch Beaufschlagen der Scheibe 2 von der Rückseite her mittels Druckluft.

Um ein ebenes, nicht gefaltetes, Ablegen der Scheiben auf dem Abförderer 7 zu gewährleisten, ist dessen Abstand zur Unterseite der Portionierplatte 5 variabel, indem hier der Abförderer 7 ein um zwei Umlenkrollen geführtes Förderband ist, welches in seiner Neigung um die von der Rotationsachse 105' entfernte Umlenkrolle verschwenkt werden kann.

An diesen ersten Abförderer 7 schließt sich ein weiterer Abförderer 7' größerer Länge und gegebenenfalls ohne Neigungsverstellung zum weiteren Abführen der Scheiben 2 an.

Ebenso wie für die Pressstempel 102a, b... in den einzelnen Formrohren 101a, b... nur ein einziger Pressstempelantrieb 14, nämlich in der Schneidposition S vorhanden ist, ist für die Gegenstempel 12a, b nicht an jeder Umfangsstelle des Portionierrevolvers 105 ein Gegenstempelantrieb 13 vorhanden, sondern beispielsweise ebenfalls nur an der Schneidstelle S:
Dies ist notwendig, um die Dicke der herzustellenden Scheiben 2 variieren zu können, beispielsweise wenn beim Nachverwiegen der zuvor abgetrennten Scheiben 2 ein zu großes oder zu geringes Scheibengewicht festgestellt wurde.

Ferner ist es aus Gründen der Haftreibung an den Wänden des Formrohres 101a... sinnvoll, nicht die gesamte axiale Presskraft durch den Pressstempel 102a aufzubringen, sondern den Gegenstempel 12a zunächst in der ganz zurückgezogenen Position in der Portionierkammer 6a zu belassen und in dieser Stellung das Schneidgut 3 von unten mittels des Pressstempels 102a... nach oben zu pressen, anschließend jedoch den Gegenstempel 12a mit der gewünschten maximalen Presskraft nach unten zu fahren, so dass sich die gewünschte Scheibendicke ergibt.

Dadurch wird die gewünschte maximale Presskraft auf das obere, abzutrennende Ende des Schneidgutes 3 ohne Reduzierung durch Wandreibung über die gesamte Länge des unteren Formrohres 101a, b... aufgebracht.

Sofern das Abwerfen der abgetrennten Scheibe 2 an der Abwurfposition A auch mittels Längsbewegung des Gegenstempels 12a erfolgt, ist dort ebenfalls ein Gegenstempel-Antrieb 13 notwendig.

Ebenso kann - in den Zeichnungen nicht dargestellt - an einer dritten Winkelposition um die Rotationsachse 105' herum eine Resteposition vorgesehen sein, in der unvollständig gefüllte Portionierkammern, wie sie am Anfang und Ende eines Schneidgutes 3, vor allem bei Knochen enthaltendem Schneidgut, auftreten können, in einen Restebehälter abgeworfen werden.

Falls dies ebenfalls mittels des Gegenstempels 12a, b geschieht, ist auch dort ein Gegenstempel-Antrieb 13 notwendig.

Figur 1b zeigt ferner die am unteren Ende der Rotationsachsen 105', 106' angeordneten Drehantriebe 15, 16 für die beiden Revolver 105, 106, sowie symbolisch die die gesamte Maschine steuernde Steuerung 20, die innerhalb des Gehäuses ebenso untergebracht ist wie die diversen Energiezuführungen und Erzeugungen für elektrischen Strom, Druckluft, Sensorik usw.

Sofern statt Scheiben zwei Fleischwürfel erzeugt werden sollen, können auf der nach unten weisenden Oberfläche der Gegenstempel 12a zusätzlich stegförmig aufragende, sich kreuzende Messer angeordnet sein, die in der Höhe die gesamte Portionierkammer durchdringen und das dorthin eingeschobene vordere Ende des Schneidgutes 3 zusätzlich in Würfel schneiden.

Um auch bei sehr dünnen Scheiben 2 ein zuverlässiges Abtransportieren und Ablegen der Scheiben 2 ohne Verwerfungen zu ermöglichen, läuft dieser Vorgang wie folgt ab, wie anhand der Figuren 2a bis n in 30°-Schritten dargestellt:
Wie ersichtlich, ist das etwa sichelförmige Portioniermesser 4, welches mit seiner konvexen äußeren Schneidkante 4a schneidet, drehbar um die Rotationsachse 105' des Portionierrohres 105 angeordnet, und kann gesteuert um jeden gewünschten Winkelbetrag, auch mehr als 360°, gedreht werden.

Dabei reicht das Portioniermesser 4 im Wesentlichen nur in einer radialen Richtung radial über die Außenkanten der Portionierkammern 6a, b, hinaus, vorzugsweise bis zum äußeren Rand des Portionierrevolvers 105.

Die konvexe Schneidkante 4a ist stärker gekrümmt als der Außenumfang des Portionierrevolvers 105, so dass sich diese Schneidkante 4 etwa über einen Winkelbereich von fast 180° erstreckt, jedoch nur über einen Winkelbereich von 90° bis 25° in den Radialbereich der Portionierkammern 6a, b hineinreicht.

In der Grundstellung - wie in Figur 2a dargestellt - befindet sich das Portioniermesser in einer solchen Stellung, in der es die in der Schneidstellung S befindliche Portionierkammer 6a nicht abdeckt.

Ausgehend von dieser Grundstellung wird das Portioniermesser 4 - bei stillstehendem, nicht drehendem Portionierrevolver 105 und ebenfalls, wie während des gesamten Aufschneidens desselben Schneidgutes 3, stillstehendem Vorschubrevolvers 106 im Uhrzeigersinn gedreht, wie in den Figuren 2b bis c dargestellt, wodurch das Portioniermesser 4 in den Querschnitt des Schneidgutes 3 eintaucht und diesen letztendlich - wie in Figur 2g dargestellt - gerade vollständig durchtrennt hat.

Ab diesem Zeitpunkt dreht das Portioniermesser 4 weiter, gegebenenfalls mit verminderter Geschwindigkeit, jedoch dreht nun auch gleichzeitig der Portionierrevolver 105 in die gleiche Richtung weiter mit der in der Portionierkammer 6 nunmehr enthaltenen, abgetrennten Scheibe 2, bis die Portionierkammer 6a mit der Scheibe 2 darin um 180° weitergedreht in der Abwurfstellung A steht (Figur 2n).

Auf dem Weg dorthin hat das Portioniermesser 4 die Portionierkammer 6a immer nach unten verschlossen, wie die Figuren 2h bis 2n zeigen, wobei durchaus eine gewissen Differenzgeschwindigkeit zwischen Portioniermesser 4 und Portionierrevolver 105 auftreten darf, was dadurch kompensiert wird, dass die Erstreckung des Portioniermessers 4 in Umfangsrichtung so groß ist, dass sie mehr als den Bereich nur einer Portionierkammer 6a abdeckt.

Sobald die noch gefüllte Portionierkammer 6a in der Abwurfstellung A angekommen ist, wird der Portionierrevolver 105 stark abgebremst, vorzugsweise angehalten, während das Portioniermesser 4 weiterdreht, bis seine Hinterkante 4b die gefüllte Portionierkammer 6a freigibt und die darin enthaltene Scheibe 2 nach unten abgeworfen werden kann.

Das Portioniermesser 4 dreht weiter bis in seine Grundstellung gemäß Figur 2a - n, von der aus es erneut in Drehung versetzt wird, sofern die nächste in der Schneidposition S positionierte Portionierkammer 6a wieder mit Schneidgut 3 gefüllt ist.

In aller Regel reichen die unterschiedlich großen Querschnitte der auf den Vorschubrevolver 106 angeordneten Formrohre 101a, b aus für ein vollständiges, hohlraumfreies Verpressen des Schneidgutes 3.

Für einzelne Anwendungen kann es jedoch sinnvoll sein, die Formrohre 101a... - wie in Figur 3 für ein einzelnes Formrohr 101 dargestellt - als radial nach außen offene Formrohr-Rinne 103 auszuführen, die auf ihrer radialen Außenseite von einem Querstempel 104 verschlossen werden kann, der in radialer Richtung von außen einsteckbar ist.

Dadurch kann eine besonders große Variabilität des Querschnittes der Formrohre 101a, b herbeigeführt werden, und vor allem das Einführen von Schneidgut 3 nochmals erleichtert werden.

So kann beispielsweise für das Einführen von Schneidgut 3 der Querstempel 104 in eine nach außen zurückgefahrene Position gestellt werden, und nach Einlegen des Schneidgutes 3, wie in der unteren Darstellung der Figur 3 ersichtlich, in eine definierte, geschlossene Position vorgeschoben werden.

Darüber hinaus kann möglicherweise noch eine definierte mittlere Position des Querstempels 4 festgelegt werden, wie in der mittleren Darstellung ersichtlich.

Bevorzugt wird jedoch eine definierte, geschlossene, einzige Stellung des Querstempels 104 entsprechend der darauf abgestimmten Form eines Pressstempels 102", wie in der unteren Position dargestellt. Sofern mehrere geschlossene Endlagen des Querstempels 104 vorgesehen werden, erfordert dies auch jeweils einen dementsprechend dimensionierten anderen Pressstempel 102, 102', 102" für das Längsverpressen.

### BEZUGSZEICHENLISTE

- 1: Portioniermodul
- 2: Scheibe
- 3: Schneidgut
- 4: Portionier-Messer
- 4a: Schneidkante
- 4b: Hinterkante
- 5: Portionier-Platte
- 6a, b: Portionier-Kammer
- 7: Abförderer
- 8: Luftöffnung
- 9:
- 10: Vorschubrichtung
- 11:
- 12a, b: Gegenstempel
- 13: Gegenstempel-Antrieb
- 14: Pressstempel-Antrieb
- 15: Drehantrieb
- 16: Drehantrieb
- 17: Kolbenstange
- 18: Ventil
- 19:
- 20: Steuerung
- 100: Vorschubmodul
- 101a, b: Formrohr
- 102a, b: Pressstempel
- 103: Formrohr-Rinne
- 103a: Öffnung
- 105: Portionier-Revolver
- 105': Revolver-Achse
- 106: Vorschub-Revolver
- 106': Vorschub-Revolver-Achse
- A: Abwurfposition
- S: Schneidposition
- R: Resteposition

## Patentansprüche

1. Vorrichtung zum Abschneiden von gewichtsgenauen Scheiben (2) von einem nur bedingt formhaltigen Schneidgut (3), insbesondere Fleisch oder Fisch, mit
- einem Portioniermodul (1) zum Schneiden und Ablegen der Scheiben (2),
- einem Vorschubmodul (100) zum Vorformen und Zuführen des Schneidgutes (3) zum Portioniermodul (1), wobei das Vorschubmodul (100), wenigstens ein in Vorschubrichtung (10) sich erstreckendes, vorne und hinten offenes Formrohr (101) aufweist, dessen hinteres offenes Ende durch einen in Vorschubrichtung (10) im Formrohr (101) beweglichen Pressstempel (102) verschlossen ist zum Vorformen und Verschieben des darin befindlichen Schneidgutes (3),
- einen Portioniermesser (4) zwischen Portioniermodul (1) und Vorschubmodul (100),
- wobei das Portioniermodul (1) auf der vom Vorschubmodul (100) abgewandten Seite des Portionier-Messers (4) eine Portionier-Platte (5) aufweist mit wenigstens einer zum Vorschubmodul (100) hin offenen, sacklochförmigen Portionier-Kammer (6), deren Querschnitt dem inneren Querschnitt des Formrohres (101) entspricht,
- das Vorschubmodul (100) mehrere Formrohre (101a, b..) mit unterschiedlich großen Querschnitten umfasst, und
- das Portioniermodul (1) mehrere vom Querschnitt her unterschiedlich große Portionierkammern (6a, b..) aufweist, deren Querschnitte den Querschnitten der Formrohre (101 a, b..) entsprechen,
**dadurch gekennzeichnet, dass**
- beim Drehen des Vorschubrevolvers (106) mit einem neuen Formrohr (101 a) in die Schneidposition (S) eine Zwangskopplung mit dem Portionierrevolver (105) **dergestalt** besteht, **dass aus mehreren Portionierkammern (6a,b) mit unterschiedlichen Querschnitten** die eine Portionierkammer (6a,b) mit dem analog gleichen Querschnitt **automatisch ausgewählt wird** und in die Schneidposition (S) dreht.

2. Vorrichtung nach Anspruch 1,
**dadurch gekennzeichnet, dass**
- die verschiedenen Formrohre (101 a, b) und die verschiedenen Portionierkammern (6a, b) jeweils auf einem Vorschubrevolver (106) bzw. einem Portionierrevolver (105) drehbar angeordnet sind, deren Rotationsachsen (105', 106') parallel zur Vorschubrichtung (10) des Vorschubmoduls (100), jedoch zueinander versetzt, insbesondere bezüglich der Schneidposition gegenüberliegend, liegen.

3. Vorrichtung nach Anspruch 2,
**dadurch gekennzeichnet, dass**
- im Vorschubrevolver (106) sowie im Portionierrevolver (105) jede Querschnittsgröße von Formrohr (101a,b) bzw. Portionierkammer (6a,b) doppelt, insbesondere auf bezüglich der Drehachse des jeweiligen Revolvers gegenüberliegenden Seiten, vorhanden ist.

4. Vorrichtung nach einem der vorhergehenden Ansprüche 2 oder 3,
**dadurch gekennzeichnet, dass**
die Böden der Portionier-Kammern (6a, b) von in und entgegen der Vorschubrichtung (10) verlagerbaren Gegenstempeln (12a,b) gebildet werden und die Gegenstempel (12a,b) der einzelnen Portionier-Kammern (6a,b) mit dem Portionierrevolver (105) mitdrehen.

5. Vorrichtung nach einem der vorhergehenden Ansprüche,
**dadurch gekennzeichnet, dass**
- ein Pressstempel-Antrieb (14) für den Pressstempel (102) sowie ein Gegenstempel-Antrieb (13) für den Gegenstempel (12) in der Vorrichtung nur je ein Mal, an der Schneidposition (S), vorhanden ist.

6. Vorrichtung nach einem der vorhergehenden Ansprüche 2 bis 5,
**dadurch gekennzeichnet, dass**
- die Rotationsachsen (105', 106') aufrecht, insbesondere vertikal stehen, das Portioniermodul (1) höher liegend als das Vorschubmodul (100) angeordnet ist und die nicht in der Schneidposition (S) befindlichen Formrohre (101a,b) oben offen und an der Unterseite von ihren Pressstempeln (102) verschlossen sind oder
- der Portionierrevolver (105) mit den offenen Seiten seiner Portionierkammern (6a,b) nach unten weisend so angeordnet ist, dass die in der Schneidposition (S) befindliche Portionierkammer (6a) mit dem in dieser Position vorhandenen, Formrohr (101a,) fluchtet und auf der bezüglich der Rotationsachse (106') gegenüberliegenden Seite des Portionierrevolvers (105) als Abwurfposition (A) unter dem Portionierrevolver ein Abförderer (7) angeordnet ist.

7. Vorrichtung nach einem der vorhergehenden Ansprüche 2 bis 6,
**dadurch gekennzeichnet, dass**
- das Portioniermesser (4) ein rotierend auf der Roationsachse (105') des Portionierrevolvers (105) angeordnetes Messer mit sichelförmiger Schneide ist und
- das Portioniermesser (4) die Positionierkammern (6a, b) in der Portionierplatte (5) über ein Winkelsegment von mindestens 60°, besser mindestens 90°, vollständig abdeckt.

8. Vorrichtung nach einem der vorhergehenden Ansprüche 2 bis 7,
**dadurch gekennzeichnet, dass**
- der Drehantrieb des Portioniermessers (4) unabhängig von der Drehung des Portionierrevolvers (105) ausgeführt ist.

9. Vorrichtung nach Anspruch 5
**dadurch gekennzeichnet, dass**
- ein Füllsensor, insbesondere im Gegenstempel-Antrieb (13) für die Gegenstempel (12a,b), vorhanden ist zum Detektieren von nicht vollständig gefüllten Portionierkammern (6a,b).

10. Vorrichtung nach einem der vorhergehenden Ansprüche,
**dadurch gekennzeichnet, dass**
- das Formrohr (101) zweiteilig ausgebildet ist mit einer seitlich offenen Formrohr-Rinne (103) und quer in dessen Öffnung (103a) einschiebbaren Seitenstempel (104), und
- das Vorschubmodul (100) neben den mehreren Formrohren (101a, b..) mit unterschiedlich großen Querschnitten jeweils dazu passende Seitenstempeln (104a, b...) umfasst und insbesondere
- der Seitenstempel (104) eine Frontfläche (1 04a) aufweist, die gegenüber der Basis (1 04b) des Seitenstempels (104) gefedert ist.

11. Vorrichtung nach einem der vorhergehenden Ansprüche,
**dadurch gekennzeichnet, dass**
das Vorschubmodul (100) zum automatischen Bestimmen des Gewichts des Schneidgutes (3) eine Indirekt-Wägevorrichtung umfasst, mit
- einer Erfassungsvorrichtung für die nach dem Verpressen des Schneidgutes (3) eingenommenen Längsposition des Pressstempels (1 02a,b),
- einer Eingabeeinheit (9) zum Eingeben der Gattung des Schneidgutes (3) und
- einer Recheneinheit, insbesondere als Teil der Steuerung (20) der Vorrichtung, in der ggf. für verschiedene Gattungen die spezifischen Gewichte bei einem oder mehreren spezifischen Pressdrücken abgespeichert sind sowie
- aus den vorgenannten Faktoren über das Volumen des Schneidgutes (3) dessen Gesamtgewicht berechenbar ist,
- ggf. Sensoren zur Feststellung von gewähltem Formrohr (101a,b...).

12. Vorrichtung nach einem der vorhergehenden Ansprüche,
4 bis 11 **dadurch gekennzeichnet, dass**
- in der Pressfläche des Gegenstempels (12a,b) wenigstens ein Drucksensor (15) angeordnet ist oder der Druck durch Kraftmessung am Gegenstempel-Antrieb (13) bestimmt wird, der mit der Steuerung (20) für den Gegenstempel (12a,b) in Verbindung steht zur Konstanthaltung des auf das Schneidgut (3) bzw. die Scheibe (2) wirkenden Druckes auch während des Eindringens des Portionier-Messers (4).
- die Gegenstempel (12a,b) in der Auswerfposition der Portionier-Kammer (6a,b...) als Ausstoßer verwendbar sind und insbesondere zusammen mit dem hinter dem Gegenstempel (12) liegenden Teil der Portionier-Kammer (6a,b) einen Druckraum (16) bildet, der unter Beibehaltung eines Randspaltes zum Rand der Portionier-Kammer hin mit Druckluft beaufschlagbar ist.

13. Verfahren zum Abschneiden von gewichtsgenauen Scheiben (2) von einem nur bedingt formhaltigen Schneidgut (3), insbesondere Fisch oder Fleisch, wobei
- das Schneidgut (3) in einem vorne offenen Formrohr (101) in Richtung des offenen Endes in eine dazu fluchtende Portionierkammer (6) gegen dessen Boden gepresst wird, und
- mittels eines in Vorschubrichtung (10) feststehenden Portionier-Messers (4) eine Scheibe (2) zwischen dem vorderen, offenen Ende des Formrohres (101) und der Portionierkammer (6) vom Schneidgut (3) abgetrennt wird,
- die Scheibe (2) mittels der Portionierkammer (6) vom Schneidgut (3) abtransportiert wird,
- beim Einlegen des Schneidguts (3) aus mehreren Formrohren (101a,b) mit unterschiedlichen Querschnitten das zum einzulegenden Schneidgut (3) passende Formrohr (z. B. 101a) ausgewählt, insbesondere automatisch ausgewählt, wird,
**dadurch gekennzeichnet, dass**
- die zum Querschnitt des ausgewählten Formrohres (101a) passende Portionierkammer (6a) mit gleichem Querschnitt aus mehreren Portionierkammern (6a,b) mit unterschiedlichen Querschnitten automatisch ausgewählt wird.

14. Verfahren nach Anspruch 13,
**dadurch gekennzeichnet, dass**
die Druckbeaufschlagung in Längsrichtung gegen das Schneidgut von der Portionierkammer (6) aus höher, insbesondere doppelt so hoch, gewählt wird wie vom Formrohr (101) aus.

15. Verfahren nach einem der vorhergehenden Verfahrensansprüche,
**dadurch gekennzeichnet, dass**
- das Portioniermesser (4) sich in Umfangsrichtung über ein solches Kreissegment erstreckt, dass es zumindest einen Querschnitt einer Portionierkammer (6a) vollständig abdecken kann, insbesondere mehrere benachbarte Portionierkammern (6a,b) vollständig abdecken kann,
- das Portioniermesser (4) zum Abtrennen und Abführen einer Scheibe (2)
- bei nicht rotierendem Portionierrevolver (105) und Formrevolver (106), das Portioniermesser (4) soweit verdreht wird, dass das Schneidgut (3) dazwischen vom Portioniermesser (4) vollständig abgetrennt wird,
- anschließend ab dem Durchtrennen des Schneidgutes (3) der Portionierrevolver (105) in die gleiche Richtung wie das Portioniermesser (4) weiter gedreht wird, bis sich die mit der Scheibe (2) gefüllte Portionierkammer (6a) in der Abwurfposition (A) befindet, und während dieser Bewegung die Portionierkammer (6a) vom mitdrehenden Portioniermesser (4) abgedeckt bleibt,
- in der Abwurfposition (A) der Portionierrevolver (105) in seiner Drehung verlangsamt wird und das Portioniermesser (4) demgegenüber weiter dreht bis zur Freigabe der Portionierkammer (6a) für den Auswurf der Scheibe (2).

16. Verfahren nach einem der vorhergehenden Verfahrensansprüche,
**dadurch gekennzeichnet, dass**
- nach dem Durchtrennen des Schneidgutes (3) die Drehbewegung des Portioniermessers (4) verlangsamt und der Portionierrevolver (105) in Drehung versetzt und zunehmend bei seiner Drehung beschleunigt wird, insbesondere bis die Drehgeschwindigkeiten übereinstimmen.

17. Verfahren nach einem der vorhergehenden Verfahrensansprüche,
**dadurch gekennzeichnet, dass**
- beim Verdrehen von Portionierrevolver (105) und Vorschubrevolver (106) der Gegenantrieb (13) sowie Pressstempelantrieb von dem bisherigen Gegenstempel (12) bzw. Pressstempel (102) außer Eingriff und mit dem jeweils neuen, in der Schneidposition (S) positionierten Stempel in Wirkverbindung gebracht wird,

18. Verfahren nach einem der vorhergehenden Verfahrensansprüche,
**dadurch gekennzeichnet, dass**
- das Auswerfen der Scheibe (2) aus der Portionierkammer (6a,b) durch Vorwärtsfahren des Gegenstempels (12a,b) und/oder Beaufschlagen der Rückseite der Scheibe (2) durch Druckluft erfolgt.

19. Verfahren nach einem der vorhergehenden Verfahrensansprüche,
**dadurch gekennzeichnet, dass**
- bei oder unmittelbar vor dem Abschneiden der Scheibe (2) die physikalischen Verhältnisse in der Portionier-Kammer (6a) insbesondere der Druck, mit dem das Schneidgut (3) am Boden der Portionier-Kammer (6a) anliegt, überwacht und durch Variation der Presskraft geregelt werden.

20. Verfahren nach einem der vorhergehenden Verfahrensansprüche,
**dadurch gekennzeichnet, dass**
- beim Einschieben des Schneidgutes (3) in die Portionier-Kammer (6a) der Gegenstempel (12) weiter zurückgezogen wird als es der gewünschten Dicke der späteren Scheibe (2) entspricht und erst bei oder nach dem Vorwärtsschieben des Schneidgutes (3) mittels eines Pressstempels (102) vom hinteren Ende her, der Gegenstempel (12) in der Gegenrichtung gegen das Schneidgut (3) bis zur Soll-Dicke (D) verfahren wird, insbesondere mit definierter Kraft.

## Claims

1. A device for cutting weight precise slices (2) from a marginally form stable cutting material (3), in particular meat or fish, the device comprising:
- a portioning module (1) for cutting and depositing the slices (2),
- a feed module (100) for preforming and feeding the cutting material (3) to the portioning module (1), wherein the feed module (100) includes at least one form tube (101) extending in a feed direction (10) which from tube is open at a front and at a rear and whose open rear end is closed by a press plunger (102) that is moveable in the form tube (101) in the feed direction (10) for preforming and moving the cutting material (3) included in the form tube,
- a portioning blade (4) arranged between the portioning module (1) and the feed module (100),
- wherein the portioning module (1) includes a portioning plate (5) on a side of the portioning blade (4) that is oriented away from the feed module (100), the portioning plate including at least one dead hole shaped portioning chamber (6) which is open towards the feed module (100) and whose cross section corresponds to an inner cross section of the form tube (101),
- wherein the feed module (100) includes plural form tubes (101 a, b..) with differently sized cross sections, and
- wherein the portioning module (1) includes plural portioning chambers (6a, b) with different cross sections, wherein cross sections of the plural portioning chambers correspond to cross sections of the form tubes (101 a, b)
**characterized in that**
rotating a feed revolver (106) with a new form tube (101 a) in to a cutting position (S) provides a forced coupling with a portioning revolver (105) so that a portioning chamber (6a, b) with analogously identical cross section is automatically selected from plural portioning chambers (6a, b) with different cross sections and rotated into the cutting position (S).

2. The device according to claim 1, **characterized in that**
the different form tubes (101 a, b) and the different portioning chambers (6a, b) are respectively rotatably arranged on a feed revolver (106) or on a portioning revolver (105), whose rotation axes (105', 106') are arranged parallel to the feed direction (10) of the feed module (100), but offset relative to one another, in particular arranged opposite relative to the cutting position.

3. The device according to claim 2,
**characterized in that**
each cross section size of form tube (101 a, b) or portioning chamber (6a, b) is provided double in the feed revolver (106) and in the portioning revolver (105), in particular on opposite sides of the respective revolver with respect to the rotation axis of the respective revolver.

4. The device according to one of the preceding claims 2 or 3,
**characterized in that**
bases of the portioning chambers (6a, b) are formed by opposite plungers (12a, b) that are moveable in and against the feed direction (10) and the opposite plungers (12a, b) of the individual portioning chambers (6a, b) co-rotate with the portioning revolver (105).

5. The device according to one of the preceding,
**characterized in that**
a press plunger drive (14) for the press plunger (102) and an opposite plunger drive (13) for the opposite plunger (12) is provided in the device only respectively once at the cutting position (S).

6. The device according to one of the preceding claims 2 - 5,
**characterized in that**
- the rotation axes (105', 106') are oriented upright, in particular vertically, the portioning module (1) is arranged higher than the feed module (100) and the form tubes (101 a, b) that are not arranged in the cutting position (S) are open on top and closed at their bottom sides by their press plungers (102), or
- the portioning revolver (105) is oriented so that open sides of its portioning chambers (6a, b) are oriented downward and so that the portioning chamber (6a) arranged in the cutting position (S) is aligned with the form tube (101 a) that is provided in this position and an extractor (7) is arranged as a drop off position (A) under the portioning revolver on a side of the portioning revolver (105) that is opposite with respect to a rotation axis (106').

7. The device according to one of the preceding claims 2 through 6,
**characterized in that**
- the portioning blade (4) is a blade with a sickle shaped cutting edge that rotates on the rotation axis (105') of the portioning revolver (105), and
- the portioning blade (4) completely covers the portioning chambers (6a, b) in the portioning plate (5) over an angular segment of at least 60°, better at least 90°.

8. The device according to one of the preceding claims 2 through 7,
**characterized in that**
the rotating drive of the portioning blade (4) is provided independently from a rotation of the portioning revolver (105).

9. The device according to claim 5,
**characterized in that**
a filling sensor is provided in particular in the opposite plunger drive (13) for the opposite plungers (12a, b) for detecting not completely filled portioning chambers (6a, b).

10. The device according to one of the preceding claims,
**characterized in that**
- the form tube (101) is configured in two components with a laterally open form tube channel (103) and lateral plungers (104) that are transversally insertable into an opening (103a) of the from tube, and
- the feed module (100) includes respectively adapted lateral plungers (104a, b...) adjacent the plural form tubes (101 a, b...) with differently sized cross sections, and in particular
- the lateral plunger (104) includes a frontal surface (104a) which is spring supported relative to a base (1 04b) of the lateral plunger (104).

11. The device according to one of the preceding claims,
**characterized in that**
- the feed module (100) includes an indirect weighing device for automatically determining a weight of the cutting material (3), the indirect weighing device comprising:
- a detection device for a longitudinal position of the press plunger (1 02a, b) that is reached after pressing the cutting material (3),
- an input unit (9) for entering a type of the cutting material (3) and
- a computing unit, in particular as a portion of the control (20) of the device in which specific weights are stored for various types of cutting materials at one or plural specific compression pressures, and
- a total weight of the cutting material is computable from the preceding factors through the volume of the cutting material (3),
- optionally sensors for detecting a selected form tube (101 a, b ...).

12. The device according to one of the preceding claims 4 - 11,
**characterized in that**
- at least one pressure sensor (15) is arranged in the press surface of the opposite plunger (12a, b) or a pressure is determined through a force measurement at the opposite plunger drive (13) which is connected with a control (20) for the opposite plunger (12a, b) for keeping a pressure impacting the cutting material (3) or the slice (2) constant also during a penetration of the portioning blade (4),
- the opposite plungers (12a, b) are useable as ejectors in an ejection position of the portioning chamber (6a, b), and the opposite plunger forms a pressure cavity (16) in particular together with a portion of the portioning chamber (6a, b) which pressure cavity is arranged behind the opposite plunger (12) and loadable with compressed air for maintaining an edge gap towards an edge of the portioning chamber.

13. A method for cutting weight precise slices (2) from a marginally shape stable cutting material (3) in particular fish or meat, wherein
- the cutting material (3) is pressed in a form tube (101) that is open in front in a direction towards an open end into a portioning chamber (6) aligned with the form tube against a base of the portioning chamber, and
- a slice (2) is separated from the cutting material (3) between the forward open end of the form tube (101) and the portioning chamber (6) by a portioning blade (4) that is fixated in the feed direction (10),
- the slice (2) is transported away from the cutting material (3) by the portioning chamber (6),
- when inserting cutting material (3) from plural form tubes (101 a, b) with different cross sections, a form tube (e.g. 101 a) is selected that fits the cutting material (3) to be inserted, wherein the form tube is in particular automatically selected,
**characterized in that**
a portioning chamber (6a) that fits the cross section of the selected form tube (101 a) is automatically selected with identical cross section from plural portioning chambers (6a, b) with different cross sections.

14. The method according to claim 13,
**characterized in that**
a pressure loading in longitudinal direction against the cutting material from the portioning chamber (6) is higher, in particular twice as high as from the form tube (101).

15. The method according to one of the preceding method claims,
**characterized in that**
- the portioning blade (4) extends in a circumferential direction over a circular segment so that it can cover at least a cross section of a portioning chamber (6a) completely, in particular so that it can cover plural adjacent portioning chambers (6a, b) completely,
- the portioning blade (4) in order to separate and extract a slice (2),
- for a non-rotating portioning revolver (105) and form revolver (106) the portioning blade (4) is rotated far enough so that the cutting material (3) there between is completely cut off by the portioning blade (4),
- subsequently after cutting the cutting material (3) the portioning revolver (105) is rotated in the same direction as the portioning blade (4) until the portioning chamber (6) filled with the slice (2) is in a drop off position (A) and the portioning chamber (6a) remains covered by the co-rotating portioning blade (4) during the movement,
- the portioning revolver (105) is slowed down in its rotation in the drop off position (A) and the portioning blade (4) continues to rotate until the portioning chamber (6a) is released for ejecting the slice (2).

16. The method according to one of the preceding method claims,
**characterized in that**
after cutting through the cutting material (3) the rotation movement of the portioning blade (4) is decelerated and the portioning revolver (105) is put into rotation and accelerated in rotation in particular until the rotation speeds coincide.

17. The method according to one of the preceding method claims,
**characterized in that**
during relative rotation of portioning revolver (105) and feed revolver (106) the opposite drive (13) and the press plunger drive are brought out of engagement with a previous opposite plunger (12) or press plunger (102) and brought into operative engagement with a respective new plunger that is positioned in the cutting position (S).

18. The method according to one of the preceding method claims,
**characterized in that**
ejecting the slice (2) from the positioning chamber (6a, b) is provided through forward movement of the opposite plunger (12a, b) and/or loading a back side of the slice (2) with compressed air.

19. The method according to one of the preceding method claims,
**characterized in that**
during or immediately before cutting off the slice (2) the physical conditions in the portioning chamber (6a), in particular the pressure at which the cutting material (3) contacts the base of the portioning cavity (6a) is monitored and controlled through a variation of a pressing force.

20. The method according to one of the preceding method claims,
**characterized in that**
during insertion of the cutting material (3) into the portioning chamber (6a) the opposite plunger (12) is pulled back further than required for a desired thickness of the subsequent slice (2) and only during or after moving the cutting material (3) forward through a press plunger (102) from a rear end of the cutting material the opposite plunger (12) is moved in opposite direction against the cutting material (3) up to a nominal thickness (D), in particular with a defined force.

## Revendications

1. Dispositif pour couper des tranches de poids précis (2) dans une marchandise à découper (3) ne gardant sa forme que dans certaines conditions, notamment de la viande ou du poisson, avec :
- un module de division en portions (1) pour couper et déposer des tranches (2),
- un module d'avance (100) pour préformer et amener la marchandise à découper (3) au module de division en portions (1), le module d'avance (100) comportant au moins un tube de mise en forme (101) qui s'étend dans la direction d'avance, qui est ouvert en avant et en arrière et dont l'extrémité arrière ouverte est fermée par un piston de pression (102) mobile dans le tube de mise en forme (101) dans la direction d'avance (10) pour préformer et pousser la marchandise à découper (3) qui se trouve à l'intérieur,
- un couteau de division en portions (4) entre le module de division en portions (1) et le module d'avance (100),
- le module de division en portions (1) comportant, sur celui des côtés du couteau de division en portions (4) qui est éloigné du module d'avance (100), un plateau de division en portions (5) avec au moins une chambre de division en portions (6), en forme de trou borgne et ouverte en direction du module d'avance (100), dont la section transversale correspond à la section transversale intérieure du tube de mise en forme (101),
- le module d'avance (100) comprenant plusieurs tubes de mise en forme (101 a, b, ...) ayant des dimensions de section transversale différentes, et
- le module de division en portions (1) comportant plusieurs chambres de division en portions (6a, b, ...) qui ont des dimensions de section transversale différentes et dont les sections transversales correspondent aux sections transversales des tubes de mise en forme (101 a, b, ...),
**caractérisé en ce que**
lors de la rotation du dispositif revolver d'avance (106) avec un nouveau tube de mise en forme (101 a) dans la position de coupe (S), un couplage forcé avec le dispositif revolver de division en portions (105) est constitué de telle sorte que, parmi plusieurs chambres de division en portions (6a, b) ayant des sections transversales différentes, celle des chambres de division en portions (6a, b) qui a la même section transversale est automatiquement choisie et tournée dans la position de coupe (S).

2. Dispositif selon la revendication 1,
**caractérisé en ce que**
les différents tubes de mise en forme (101 a, b) et les différentes chambres de division en portions (6a, b) sont agencés de manière à pouvoir tourner respectivement sur un dispositif revolver d'avance (106) ou sur un dispositif revolver de division en portions (105) dont les axes de rotation (105', 106') sont parallèles à la direction d'avance (10) du module d'avance (100), mais décalés l'un par rapport à l'autre, notamment à l'opposé l'un de l'autre par rapport à la position de coupe.

3. Dispositif selon la revendication 2,
**caractérisé en ce que**,
dans le dispositif revolver d'avance (106) ainsi que dans le dispositif revolver de division en portions (105), chaque dimension de section transversale de tube de mise en forme (101 a, b) ou de chambre de division en portions (6a, b) est présente en double, notamment sur des côtés opposés par rapport à l'axe de rotation du dispositif revolver respectif.

4. Dispositif selon l'une des revendications précédentes 2 ou 3,
**caractérisé en ce que**
les fonds des chambres de division en portions (6a, b) sont formés par des contre-pistons (12a, b) déplaçables dans la direction d'avance (10) et à l'opposé de celle-ci et **en ce que** les contre-pistons (12a, b) des chambres de division en portions (6a, b) tournent avec le dispositif revolver de division en portions (105).

5. Dispositif selon l'une des revendications précédentes,
**caractérisé en ce que**
il est prévu à chaque fois en un seul exemplaire, au niveau de la position de coupe (S), un dispositif d'entraînement de piston de pression (14) pour le piston de pression (102) ainsi qu'un dispositif d'entraînement de contre-piston (13) pour le contre-piston (12) dans le dispositif.

6. Dispositif selon l'une des revendications précédentes 2 à 5,
**caractérisé en ce que**
- les axes de rotation (105', 106') sont debout, notamment verticaux, le module de division en portions (1) est placé plus haut que le module d'avance (100) et les tubes de mise en forme (101 a, b) qui ne sont pas situés dans la position de coupe (S) sont ouverts vers le haut et fermés en bas par leurs pistons de pression (102) ou
- le dispositif revolver de division en portions (105) est agencé de telle sorte avec les côtés ouverts de ses chambres de division en portions (6a, b) regardant vers le bas que la chambre de division en portions (6a) située dans la position de coupe (S) est alignée avec le tube de mise en forme (101 a) présent dans cette position et un dispositif d'enlèvement (7) est placé comme position d'éjection (A) sous le dispositif revolver de division en portions du côté du dispositif revolver de division en portions (105) qui est à l'opposé par rapport à l'axe de rotation (106').

7. Dispositif selon l'une des revendications précédentes 2 à 6,
**caractérisé en ce que**
- le couteau de division en portions (4) est un couteau qui est agencé de manière à pouvoir tourner sur l'axe de rotation (105') du dispositif revolver de division en portions (105) et qui comporte une lame en forme de faucille et
- le couteau de division en portions (4) recouvre complètement les chambres de division en portions (6a, b) dans le plateau de division en portions (5) sur un segment angulaire d'au moins 60°, de préférence d'au moins 90°.

8. Dispositif selon l'une des revendications précédentes 2 à 7,
**caractérisé en ce que**
le dispositif d'entraînement en rotation du couteau de division en portions (4) est réalisé indépendamment de la rotation du dispositif revolver de division en portions (105).

9. Dispositif selon la revendication 5,
**caractérisé en ce que**
un capteur de niveau de remplissage est prévu, notamment dans le dispositif d'entraînement de contre-piston (13) destiné au contre-piston (12a, b), en vue de la détection de chambres de division en portions (6a, b) qui ne sont pas complètement remplies.

10. Dispositif selon l'une des revendications précédentes,
**caractérisé en ce que**
- le tube de mise en forme (101) est conçu en deux parties avec une goulotte de tube de mise en forme (103) ouverte latéralement et avec des pistons latéraux (104) pouvant être poussés transversalement dans l'ouverture (1 03a) de ladite goulotte, et
- le module d'avance (100) comprend outre les tubes de mise en forme (101 a, b, ...) ayant des dimensions de section transversale différentes à chaque fois des pistons latéraux (104a, b, ...) adaptées auxdites dimensions, et notamment
- le piston latéral (104) comporte une surface frontale (104a) qui est soumise à une action de ressort par rapport à la base (104b) du piston latéral (104).

11. Dispositif selon l'une des revendications précédentes,
**caractérisé en ce que**
le dispositif d'avance (100) comprend, pour la détermination automatique du poids de la marchandise à découper (3), un dispositif de pesée indirecte, avec
- un dispositif de détection pour la position longitudinale, prise après la compression de la marchandise à découper (3), du piston de pression (102a, b),
- une unité d'entrée (9) pour entrer la sorte de marchandise à découper (3) et
- une unité de calcul, faisant notamment partie de la commande (20) du dispositif, dans laquelle sont mémorisés les poids spécifiques pour une ou plusieurs pressions spécifiques, le cas échéant pour les différentes sortes de marchandise à découper, et dans laquelle le poids total de la marchandise à découper peut être calculé à partir des facteurs susmentionnés en fonction du volume de la marchandise à découper (3),
- le cas échéant, des capteurs pour déterminer le tube de mise en forme (101 a, b, ...) choisi.

12. Dispositif selon l'une des revendications précédentes 4 à 11,
**caractérisé en ce que**
- au moins un capteur de pression (15) est agencé dans la surface de pression du contre-piston (12a, b) ou la pression est déterminée en mesurant une force au niveau du dispositif d'entraînement de contre-piston (13), lequel capteur de pression est en liaison avec la commande (20) destinée au contre-piston (12a, b) afin de maintenir constante la pression exercée sur la marchandise à découper (3) ou sur la tranche (2), même pendant la pénétration du couteau de division en portions (4).
- les contre-pistons (12a, b) peuvent être utilisés comme éjecteurs dans la position d'éjection des chambres de division en portions (6a, b) et ils forment notamment conjointement à la partie des chambres de division en portions (6a, b) qui se trouve derrière le contre-piston (12) un espace de compression (16) qui peut être alimenté en air comprimé en respectant une fente marginale au bord de la chambre de division en portions.

13. Procédé pour découper des tranches de poids précis (2) dans une marchandise à découper (3) ne gardant sa forme que dans certaines conditions, notamment de la viande ou du poisson, selon lequel
- on presse la marchandise à découper (3) dans un tube de mise en forme (101) ouvert vers l'avant, en direction de l'extrémité ouverte, dans une chambre de division en portions (6) alignée avec ledit tube et contre le fond de ladite chambre,
- au moyen d'un couteau de division en portions (4) fixe dans la direction d'avance (10), on sépare une tranche (2) de la marchandise à découper (3) entre l'extrémité avant ouverte du tube de mise en forme (101) et la chambre de division en portions (6),
- on éloigne la tranche (2) de la marchandise à découper (3) au moyen de la chambre de division en portions (6),
- lors de la mise en place de la marchandise à découper (3), on choisit parmi plusieurs tubes de mise en forme (101 a, b) ayant des sections transversales différentes, notamment automatiquement, le tube de mise en forme (par exemple 101 a) adapté à la marchandise à découper (3) à mettre en place,
**caractérisé en ce que**
on choisit automatiquement parmi plusieurs chambres de division en portions (6a, b) ayant des sections transversales différentes la chambre de division en portions (6a) adaptée à la section transversale du tube de mise en forme choisi (101 a) et ayant donc la même section transversale.

14. Procédé selon la revendication 13,
**caractérisé en ce que**
l'application de pression dans la direction longitudinale contre la marchandise à découper à partir de la chambre de division en portions (6) est choisie plus grande, notamment deux fois plus grande, que celle à partir du tube de mise en forme (101).

15. Procédé selon l'une des revendications de procédé précédentes, **caractérisé en ce que**
- le couteau de division en portions (4) s'étend dans la direction circonférentielle au-dessus d'un segment circulaire tel qu'il peut recouvrir complètement au moins une section transversale d'une chambre de division en portions (6a), et notamment qu'il peut recouvrir complètement plusieurs chambres de division en portions (6a, b) voisines,
- le couteau de division en portions (4) destiné à séparer et éloigner une tranche (2),
- alors que le dispositif revolver de division en portions (105) et le dispositif revolver de mise en forme (106) ne tournent pas, le couteau de division en portions (4) est tourné si loin que la marchandise à découper (3) qui se trouve entre les dispositifs est complètement séparée par le couteau de division en portions (4),
- après la séparation de la marchandise à découper (3), le dispositif revolver de division en portions (105) est tourné dans la même direction que le couteau de division en portions (4) jusqu'à ce que la chambre de division en portions (6a) remplie avec la tranche (2) se trouve dans la position d'éjection (A) et, pendant ce mouvement, la chambre de division en portions (6a) reste recouverte par le couteau de division en portions (4) qui tourne en même temps,
- dans la position d'éjection (A), la rotation du dispositif revolver de division en portions (105) est ralentie et le couteau de division en portions (4) est encore tourné par rapport à celui-ci jusqu'à libérer la chambre de division en portions (6a) pour l'éjection de la tranche (2).

16. Procédé selon l'une des revendications de procédé précédentes,
**caractérisé en ce que**
après la séparation de la marchandise à découper (3), on ralentit le mouvement de rotation du couteau de division en portions (4) et on met en rotation le dispositif revolver de division en portions (105) puis on accélère celui-ci de plus en plus dans sa rotation, notamment jusqu'à ce que les vitesses de rotation coïncident.

17. Procédé selon l'une des revendications de procédé précédentes,
**caractérisé en ce que**
lors de la rotation du dispositif revolver de division en portions (105) et du dispositif revolver d'avance (106), on emmène le dispositif d'entraînement de contre-piston (13) et le dispositif d'entraînement de piston de pression hors de prise respectivement du contre-piston (12) et du piston de pression (102) jusqu'alors entraînés et on les amène à agir chacun avec le nouveau piston respectif positionné dans la position de coupe (S).

18. Procédé selon l'une des revendications de procédé précédentes,
**caractérisé en ce que**
l'éjection de la tranche (2) hors de la chambre de division en portions (6a, b) s'effectue via le déplacement en avant du contre-piston (12a, b) et/ou via l'application d'air comprimé contre la partie arrière de la tranche (2).

19. Procédé selon l'une des revendications de procédé précédentes,
**caractérisé en ce que**
lors de ou juste avant la coupe de la tranche (2), on surveille les conditions physiques existant dans la chambre de division en portions (6a), notamment la pression avec laquelle la marchandise à découper (3) appuie sur le fond de la chambre de division en portions (6a), et on les régule en modifiant la force de pression.

20. Procédé selon l'une des revendications de procédé précédentes,
**caractérisé en ce que**
lorsqu'on pousse la marchandise à découper (3) dans la chambre de division en portions (6a), on retire le contre-piston (12) plus loin que la distance correspondant à l'épaisseur souhaitée pour la future tranche (2) et c'est seulement lors ou après la poussée en avant de la marchandise à découper (3) au moyen d'un piston de pression (102) depuis l'extrémité arrière qu'on déplace le contre-piston (12) dans le sens contraire contre la marchandise à découper (3) jusqu'à l'épaisseur de consigne (D), notamment avec une force définie.
